# EUROPEAN PATENT APPLICATION

(11) **EP 4 451 736 A1**
(43) Date of publication of application: **23.10.2024**
(21) Application number: 22907281.4
(22) Date of filing: 05.12.2022
(51) Int. Cl.: H04W 28/084, H04W 8/18, H04W 48/08, H04W 60/00

(54) **USER EQUIPMENT (UE)**

(30) Priority: 16.12.2021 JP 2021203947
(71) Applicant: Sharp Kabushiki Kaisha, Sakai-ku Sakai-shi, Osaka 590-8522 (JP)
(72) Inventor: SUGAWARA, Yasuo, Sakai City, Osaka 590-8522 (JP)
(74) Representative: Müller Hoffmann & Partner
(86) International application number: PCT/JP2022/044770
(87) International publication number: WO 2023/112753

(57) **Abstract**

To clarify handling of rejected S-NSSAI that is rejected in a certain tracking area in a certain registration area and that is available in another tracking area in the registration area, behaviors of a UE and a NW for the rejected S-NSSAI, and the like. A UE receives, from a core network, rejected NSSAI for a current tracking area and/or a rejection cause indicating S-NSSAI not available in the current tracking area, the rejected NSSAI includes S-NSSAI that is not available in the current tracking area in a current registration area and that is available in another tracking area in the current registration area, the S-NSSAI is stored in the rejected NSSAI for the current tracking area in the UE, and use of the S-NSSAI is forbidden in the current tracking area during when the S-NSSAI is stored in the rejected NSSAI for the current tracking area in the UE.

## Description

### Technical Field

The present invention relates to a User Equipment (UE).

### Background Art

In the 3rd Generation Partnership Project (3GPP), system architecture of a 5G System (5GS), which is a fifth generation (5G) mobile communication system, has been studied, and discussions are underway to support new procedures and new functions (see NPLs 1 to 3). The concept of a network slice (NS) was introduced in Release 15, which is an early release of the 5G standard, and functional extension of the network slice has subsequently been discussed for Release 16 and Release 17 (see NPLs 1 to 3).

### Citation List

### Non Patent Literature

NPL 1: 3GPP TS 23.501 V17.2.0 (2021-09); 3rd Generation Partnership Project; Technical Specification Group Services and System Aspects; System architecture for the 5G System (5GS); Stage 2 (Release 17)

NPL 2: 3GPP TS 23.502 V17.2.1. (2021-09); 3rd Generation Partnership Project; Technical Specification Group Services and System Aspects; Procedures for the 5G System (5GS); Stage 2 (Release 17)

NPL 3: 3GPP TS 24.501 V17.4.1 (2021-09); 3rd Generation Partnership Project; Technical Specification Group Core Network and Terminals; Non-Access-Stratum (NAS) protocol for 5G System (5GS); Stage 3; (Release 17)

NPL 4: TSG SA Meeting #SP-94E; SP-211320; 14-20 December 2021, Electronic meeting

### Summary of Invention

### Technical Problem

For Release 18, further functional extension regarding the network slice may be studied and study may be made on handling of rejected S-NSSAI that is rejected in a certain tracking area in a certain registration area and that is available in another tracking area in the registration area. However, no specific discussion has been started yet (NPL 4).

An aspect of the present invention has been made in view of the above circumstances, and an object of the present invention is to clarify handling of rejected S-NSSAI that is rejected in a certain tracking area in a certain registration area and that is available in another tracking area in the registration area, behaviors of a UE and an NW for the rejected S-NSSAI, and the like.

### Solution to Problem

An aspect of the present invention provides a User Equipment (UE) including a transmission and/or reception unit, a controller, and a storage unit, wherein the transmission and/or reception unit receives, from a core network, rejected NSSAI for a current tracking area and/or a rejection cause indicating S-NSSAI not available in the current tracking area, the rejected NSSAI includes S-NSSAI that is not available in the current tracking area in a current registration area and that is available in another tracking area in the current registration area, the controller stores the S-NSSAI in the rejected NSSAI for the current tracking area in the storage unit, and use of the S-NSSAI is forbidden in the current tracking area during when the S-NSSAI is stored in the rejected NSSAI for the current tracking area in the storage unit.

### Advantageous Effects of Invention

An aspect of the present invention enables clarification of handling of rejected S-NSSAI that is rejected in a certain tracking area in a certain registration area and that is available in another tracking area in the registration area, behaviors of a UE and an NW for the rejected S-NSSAI, and the like.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of UE.
FIG. 4 is a diagram illustrating a configuration of an access network apparatus (gNB) in the 5GS.
FIG. 5 is a diagram illustrating a configuration of a core network apparatus (AMF/SMF/UPF) in the 5GS.
FIG. 6 is a diagram illustrating a registration procedure.
FIG. 7 is a diagram illustrating a configuration update procedure.
FIG. 8 is a diagram illustrating a de-registration procedure.

### Description of Embodiments

A preferred embodiment for carrying out an aspect of the present invention will be described below with reference to the drawings. Note that an embodiment of a mobile communication system to which an aspect of the present invention is applied will be described as an example in the present embodiment.

### 1. Overview of System

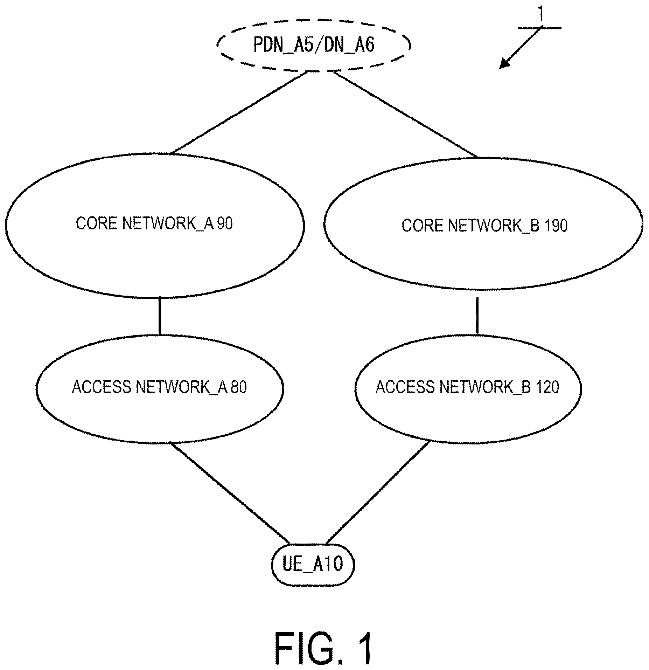

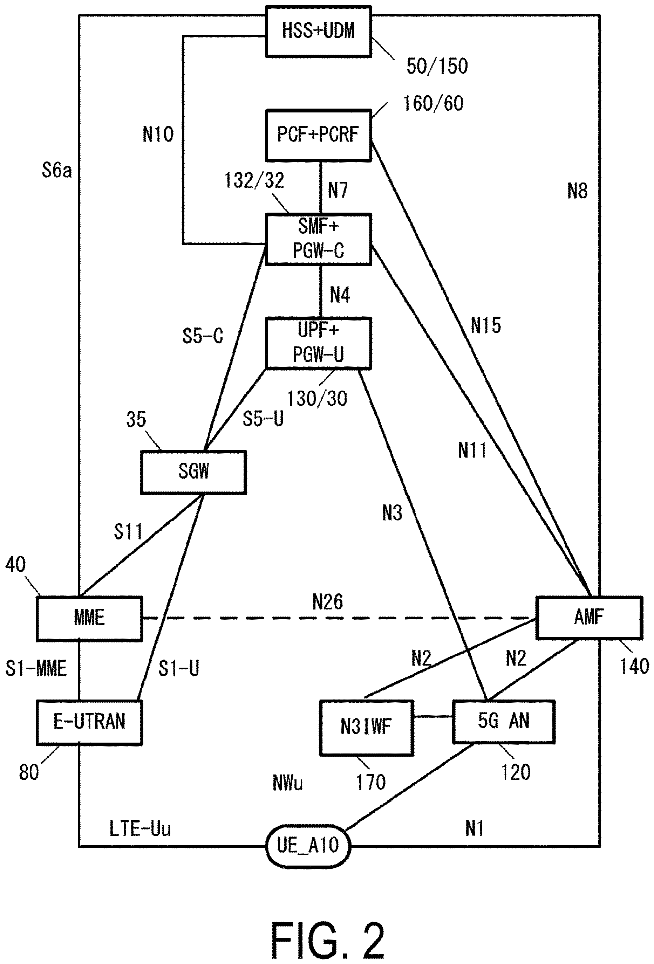

First, FIG. 1 is a diagram illustrating an overview of a mobile communication system 1 used in each embodiment, and FIG. 2 is a diagram illustrating a detailed configuration of the mobile communication system 1.

FIG. 1 illustrates the mobile communication system 1 including UE_A 10, an access network_A 80, a core network_A 90, a Packet Data Network (PDN)_A 5, an access network_B 120, a core network_B 190, and a Data Network (DN)_A 6.

In the following description, the reference numerals of these apparatuses and functions may be omitted, as in UE, an access network_A, a core network_A, a PDN, an access network_B, a core network_B, a DN, and the like.

In addition, FIG. 2 illustrates apparatuses and functions such as the UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other.

In the following description, the reference numerals of these apparatuses and functions may be omitted as in UE, an E-UTRAN, an MME, an SGW, a PGW-U, a PGW-C, a PCRF, an HSS, a 5G AN, an AMF, a UPF, an SMF, a PCF, a UDM, an N3IWF, and the like.

Note that an Evolved Packet System (EPS) that is a 4G system includes an access network_A and a core network_A and may further include UE and/or a PDN. In addition, a 5G System (5GS) that is a 5G system includes UE, an access network_B, and a core network B and may further include a DN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile phone or a smartphone, and may be a terminal apparatus that can be connected to both the EPS and the 5GS. The UE may include a Universal Integrated Circuit Card (UICC) and an Embedded UICC (eUICC). Note that the UE may be referred to as user equipment or a terminal apparatus.

In addition, the access network_A corresponds to an Evolved Universal Terrestrial Radio Access Network (E-UTRAN) and/or a wireless LAN access network. In the E-UTRAN, one or multiple evolved Node-B (eNBs) 45 are deployed. Note that, in the following description, the reference numeral of the eNB 45 may be omitted as in eNB. In addition, in a case that there are multiple eNBs, the eNBs are connected to each other via, for example, an X2 interface. In addition, one or multiple access points are deployed on the wireless LAN access network.

In addition, the access network_B corresponds to a 5G access network (5G AN). The 5G AN includes an NG Radio Access Network (NG-RAN) and/or a non-3GPP access network. One or multiple NR Node-Bs (gNBs) 122 are deployed on the NG-RAN. Note that in the following description, the symbol for the gNB 122 may be omitted as a gNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) used in the EPS that is a 4G system. In addition, in a case that there are multiple gNBs, the gNBs are connected to each other via, for example, an Xn interface.

The non-3GPP access network may be an untrusted non-3GPP access network or may be a trusted non-3GPP access network. Here, the untrusted non-3GPP access network may be a non-3GPP access network that does not manage security on the access network, for example, a public wireless LAN. On the other hand, the trusted non-3GPP access network may be an access network defined by the 3GPP and may include a trusted non-3GPP access point (TNAP) and a trusted non-3GPP Gateway function (TNGF).

In addition, in the following description, the E-UTRAN and the NG-RAN may be referred to as 3GPP access. In addition, the wireless LAN access network and the non-3GPP AN may be referred to as non-3GPP access. In addition, nodes deployed on the access network_B may also be collectively referred to as NG-RAN nodes.

In addition, in the following description, the access network_A, and/or the access network_B, and/or an apparatus included in the access network_A, and/or an apparatus included in the access network_B may be referred to as an access network or an access network apparatus.

The core network_A corresponds to an Evolved Packet Core (EPC). In the EPC, for example, a Mobility Management Entity (MME), a Serving Gateway (SGW), a Packet Data Network Gateway (PGW)-U, a PGW-C, a Policy and Charging Rules Function (PCRF), a Home Subscriber Server (HSS), and the like are deployed.

In addition, the core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be referred to as a 5GC.

In addition, in the following description, the core network_A, and/or the core network_B, an apparatus included in the core network_A, and/or an apparatus included in the core network_B may be referred to as a core network, a core network apparatus, or an intra-core network apparatus.

The core network (the core network_A and/or the core network_B) may refer to an IP mobile communication network operated by a mobile communication (Mobile Network Operator (MNO)) connecting the access network (the access network_A and/or the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

In addition, although FIG. 1 illustrates a case that the PDN and the DN are the same, the PDN and the DN may be different. The PDN may be a Data Network (DN) that provides communication services to the UE. Note that the DN may be configured as a packet data service network or may be configured for each service. In addition, the PDN may include a connected communication terminal. Thus, "to be connected to the PDN" may mean "to be connected to a communication terminal and a server apparatus deployed in the PDN". In addition, "to transmit and/or receive user data to and/or from the PDN" may mean "to transmit and/or receive user data to and/or from a communication terminal and a server apparatus deployed in the PDN". Note that the PDN may be referred to as a DN, and the DN may be referred to as a PDN.

In addition, in the following, at least some of the access network_A, the core network_A, the PDN, the access network_B, the core network_B, and the DN, and/or one or multiple apparatuses included in these may be referred to as a network or a network apparatus. In other words, the expression that "the network and/or the network apparatus transmits and/or receives a message and/or performs a procedure" means that "at least some of the access network_A, the core network_A, the PDN, the access network_B, the core network_B, and the DN, and/or one or multiple apparatuses included in these transmit and/or receive a message and/or perform a procedure".

In addition, the UE can be connected to the access network. In addition, the UE can be connected to the core network over the access network. Furthermore, the UE can be connected to the PDN or the DN over the access network and the core network. In other words, the UE can transmit and/or receive (communicate) user data to and/or from the PDN or the DN. In a case that user data is transmitted and/or received, not only Internet Protocol (IP) communication but also non-IP communication may be used.

Here, IP communication refers to data communication using an IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. In addition, non-IP communication refers to data communication performed using no IP, in which data is transmitted and/or received in a form different from the structure of an IP packet. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, apparatuses which are not illustrated in FIG. 2 may be included in the access network_A, the core network_A, the access network_B, the core network_B, the PDN_A, and the DN_A. For example, the core network_A and/or the core network B may include an Authentication Server Function (AUSF) and an Authentication, authorization, and accounting (AAA) server (AAA-S).

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

The AAA server is an apparatus that is connected directly to the AUSF or indirectly to the AUSF via another network apparatus and has authentication, authorization, and billing functions. The AAA server may be a network apparatus within the core network. Note that the AAA server may not be included in the core network_A and/or the core network B and may be included in the PLMN. In other words, the AAA server may be a core network apparatus or may be an apparatus outside the core network. For example, the AAA server may be a server apparatus within the PLMN managed by a 3rd party.

Note that, although each of the apparatuses and functions is illustrated one by one for simplicity in FIG. 2, multiple similar apparatuses and functions may be included in the mobile communication system 1. Specifically, multiple apparatuses and functions such as multiple pieces of UE_A 10, E-UTRANs 80, MMEs 40, SGWs 35, PGW-Us 30, PGW-Cs 32, PCRFs 60, HSSs 50, 5G ANs 120, AMFs 140, UPFs 130, SMFs 132, PCFs 160, and/or UDMs 150 may be included in the mobile communication system 1.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. In addition, at least a part (including all) of the functions of each apparatus may be configured as physical hardware, logical hardware, or software.

Note that each of the storage units (storage unit_A 340, storage unit_B 540, and storage unit_B 740) in the apparatuses and functions appearing below includes, for example, a semiconductor memory, a Solid State Drive (SSD), a Hard Disk Drive (HDD), or the like. In addition, each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each UE. In addition, in a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of LTE

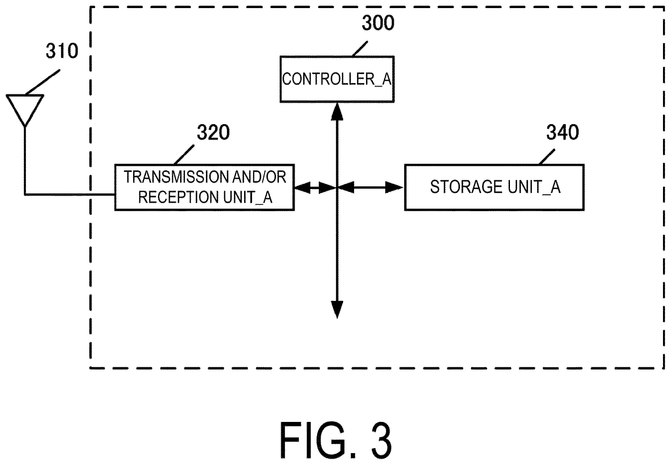

First, an apparatus configuration example of the User Equipment (UE) will be described with reference to FIG. 3. The UE includes a controller_A 300, an antenna 310, a transmission and/or reception unit_A 320, and a storage unit_A 340. The controller_A 300, the transmission and/or reception unit_A 320, and the storage unit_A 340 are connected via a bus. The transmission and/or reception unit_A 320 is connected to the antenna 310.

The controller_A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. In addition, the UE can communicate with the base station apparatus (gNB) within the 5G AN with the use of the transmission and/or reception unit_A 320. In addition, the UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE. The storage unit_340 may have a function of storing control information transmitted and/or received to and/or from the access network apparatus, the core network apparatus, and the DN.

### 2.2. Apparatus Configuration of gNB

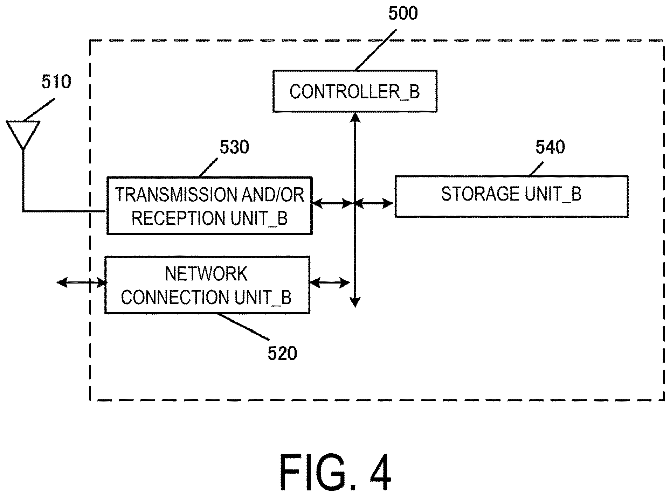

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. In addition, the gNB can communicate with the UE with the use of the transmission and/or reception unit_B 530.

The storage unit_B 540 is a function unit that stores programs, user data, control information, and the like necessary for each operation of the gNB. The storage unit_540 may have a function of storing control information transmitted and/or received to and/or from the UE and another access network apparatus (base station apparatus), core network apparatus, and DN.

### 2.3. Apparatus Configuration of AMF

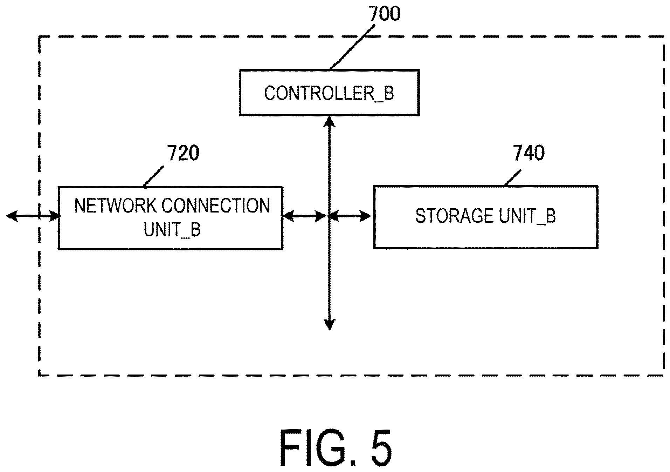

Next, an apparatus configuration example of the AMF will be described with reference to FIG. 5. The AMF includes a controller_B 700, a network connection unit_B 720, and a storage unit_B 740. The controller B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB), and/or the SMF, and/or the PCF, and/or the UDM, and/or the SCEF, and/or the NSACF in the 5G AN. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. In addition, the AMF can transmit and/or receive a NAS message to and/or from the UE over the N1 interface with the use of the network connection unit_A 620. However, the N1 interface is a logical interface, and thus communication between the UE and the AMF is actually performed over the 5G AN. In addition, in a case that the AMF supports an N26 interface, the AMF can communicate with the MME over the N26 interface with the use of the network connection unit_A 620.

The storage unit_B 740 is a function unit that stores programs, user data, control information, and the like necessary for each operation of the AMF. The storage unit_740 may have a function of storing control information transmitted and/or received to and/or from the UE, the access network apparatus, and another core network apparatus and DN.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of transferring a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In addition, in registration management, an RM state for each piece of UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In addition, in the RM-REGISTERED state, because the UE is registered in the network, the UE can receive a service that requires registration with the network. Note that the RM state may be referred to as a 5GMM state. In this case, the RM-DEREGISTERED state may be referred to as a 5GMM-DEREGISTERED state, and the RM-REGISTERED state may be referred to as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may start transmission and/or reception of user data and a control message, or may respond to paging. Furthermore, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In addition, in connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In addition, the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In addition, in the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be referred to as an idle mode, and a connected state mode may be referred to as a connected mode.

Note that the CM state may be referred to as a 5GMM mode. In this case, the non-connected state may be referred to as a 5GMM non-connected mode (5GMM-IDLE mode), and the connected state may be referred to as a 5GMM connected mode (5GMM-CONNECTED mode). In addition, the non-connected state in 3GPP access may be referred to as a 5GMM non-connected mode in 3GPP access (5GMM-IDLE mode over 3GPP access), and the connected state in 3GPP access may be referred to as a 5GMM connected mode in 3GPP access (5GMM-CONNECTED mode over 3GPP access). In addition, the non-connected state in non-3GPP access may be referred to as a 5GMM non-connected mode in non-3GPP access (5GMM-IDLE mode over non-3GPP access), and the connected state in non-3GPP access may be referred to as a 5GMM connected mode in non-3GPP access (5GMM-CONNECTED mode over non-3GPP access). Note that the 5GMM non-connected mode may be referred to as an idle mode, and the 5GMM connected mode may be referred to as a connected mode.

In addition, one or multiple AMFs may be deployed within the core network_B. The AMF may be a Network Function (NF) that manages one or more Network Slice Instances (NSIs). In addition, the AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.4. Apparatus Configuration of SMF

Next, an apparatus configuration example of the SMF will be described with reference to FIG. 5. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM, and/or the NSACF.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of signaling arrival of downlink data (Downlink Data Notification), a function of providing SM information specific to an AN (for each AN) that is transmitted to the AN via the AMF over the N2 interface, a function of determining a Session and Service Continuity mode (SSC mode) for a session, a roaming function, and the like.

The storage unit_740 may have a function of storing control information transmitted and/or received to and/or from the UE, the access network apparatus, and another core network apparatus and DN.

### 2.5. Apparatus Configuration of UPF

Next, an apparatus configuration example of the UPF will be described with reference to FIG. 5. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be interconnected with the DN (that is, a function of transferring user data as a gateway between the DN and the core network_B), a function of routing and transferring packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

In addition, the UPF may be a gateway for IP communication and/or non-IP communication. In addition, the UPF may have a function of transferring IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

The storage unit_740 may have a function of storing control information transmitted and/or received to and/or from the UE, the access network apparatus, and another core network apparatus and DN.

Note that the user plane (also referred to as a UP) refers to user data that is transmitted and/or received between the UE and the network. The user plane may be transmitted and/or received using a PDN connection in a case of 4G, or a PDU session in a case of 5G. Furthermore, in a case of the EPS, the user plane may be transmitted and/or received using an LTE-Uu interface, and/or an S1-U interface, and/or an S5 interface, and/or an S8 interface, and/or an SGi interface. Furthermore, in a case of the 5GS, the user plane may be transmitted and/or received over the interface between the UE and the NG RAN, and/or the N3 interface, and/or the N9 interface, and/or the N6 interface. The user plane may be hereinafter referred to as a U-Plane.

In addition, the control plane (also referred to as a CP) refers to a control message that is transmitted and/or received in order to perform communication control of the UE or the like. The control plane may be transmitted and/or received using Non-Access-Stratum (NAS) signaling connection between the UE and the MME. The control plane may be transmitted and/or received using the Non-Access-Stratum (NAS) signaling connection between the UE and the AMF. In addition, in a case of the EPS, the control plane may be transmitted and/or received using the LTE-Uu interface and an S1-MME interface. Furthermore, in a case of the 5GS, the control plane may be transmitted and/or received using the interface between the UE and the NG RAN and the N2 interface. The control plane may be hereinafter referred to as a control plane, or may be hereinafter referred to as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

### 2.6. Description of Other Apparatuses and/or Functions and Identification Information according to Present Embodiment

Next, other apparatuses and/or functions and identification information will be described.

A network refers to at least some of the access network_B, the core network_B, and the DN. One or multiple apparatuses included in at least a part of the access network_B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing".

A Network Slice Selection Function (NSSF) may be a network function (also referred to as an NF) having a function of selecting a network slice serving the UE.

A Network Data Analytics Function (NWDAF) may be an NF having a function of performing data collection from an NF and an application function (also referred to as an AF).

A Policy Control Function (PCF) may be an NF having a function of determining a policy for controlling a behavior of a network.

A Network Repository Function (NRF) may be an NF having a service discovery function. The NRF may be an NF that, in a case of receiving a discovery request of another NF from a certain NF, provides information of the discovered NF.

The Network Slice Admission Control Function (NSACF) may have a function of monitoring and controlling the number of UEs registered per NS and/or the number of PDU sessions per NS regarding the network slice (NS) related to Network Slice Admission Control (NSAC). The NSACF may be configured using the maximum number of UEs per NS and/or the maximum number of PDU sessions per NS allowed for each NS related to NSAC. The NSACF may have a function of increasing and decreasing the number of UEs registered with a certain NS so that the number does not exceed the maximum number of UEs allowed to be registered with the NS. The NSACF may maintain a list of UE IDs registered with the NS related to NSAC. The NSACF may have the following function: in a case that the number of UEs registered with the NS is increased (for example, in a case that a certain UE newly transmits a registration request message to the NS), the NSACF confirms whether the ID of the UE is already included in the list of UE IDs registered with the NS, and in a case that the ID of the UE is not included in the list, the NSACF further confirms whether the maximum number of UEs per NS is reached for the NS. In a case that a registration status of the UE for the NS related to NSAC changes during the registration procedure, and/or the de-registration procedure, and/or the NSSAA procedure, and/or the like, the AMF may make a request related to the maximum number of UEs per NS to the NSACF. The NSACF may have a function of increasing and decreasing the number of PDU sessions for a certain NS so that the number does not exceed the maximum number of PDU sessions allowed for the NS. The NSACF may have the following function: in a case that the number of PDU sessions using the NS is increased (for example, in a case that a certain UE transmits a PDU session establishment request message for the NS), the NSACF confirms whether the maximum number of UEs per NS is reached for the NS. The SMF may make a request related to the maximum number of PDU sessions per NS to the NSACF during the PDU session establishment procedure, and/or the PDU session release procedure.

A session management (SM) message (also referred to as a Non-Access-Stratum (NAS) SM message) may be a NAS message used in a procedure for SM, or may be a control message transmitted and/or received between the UE_A 10 and the SMF_A 230 via the AMF_A 240. Furthermore, the SM message may include a PDU session establishment request message, a PDU session establishment accept message, a PDU session reject message (PDU session establishment reject message), a PDU session modification request message, a PDU session modification command message, a PDU session modification completion message (PDU session modification complete), a PDU session modification command reject message, a PDU session modification reject message, a PDU session release request message, a PDU session release reject message, a PDU session release command message, a PDU session release completion message (PDU session release complete message), and the like.

An SM procedure (also referred to as a procedure for SM) may include a PDU session establishment procedure, a PDU session modification procedure, and a PDU session release procedure (UE-requested PDU session release procedure). Note that each procedure may be a procedure initiated by the UE or may be a procedure initiated by the NW.

A Mobility management (MM) message (also referred to as a NAS MM message) may be a NAS message used in a procedure for MM, or may be a control message transmitted and/or received between the UE_A 10 and the AMF_A 240. Furthermore, the MM message may include a Registration request message, a Registration accept message, a Registration reject message, a De-registration request message, a De-registration accept message, a configuration update command message, a configuration update accept (configuration update complete) message, a Service request message, a Service accept message, a Service reject message, a Notification message, a Notification response message, and the like.

An MM procedure (also referred to as a procedure for MM) may include a Registration procedure, a De-registration procedure, a Generic UE configuration update procedure, an authentication and/or authorization procedure, a Service request procedure, a Paging procedure, and a Notification procedure.

A 5G System (5GS) service may be a connection service provided using the core network_B 190. In addition, the 5GS service may be a service different from an EPS service, or may be a service similar to the EPS service.

A non 5GS service may be a service other than the 5GS service and may include an EPS service and/or a non EPS service.

A Packet Data Network (PDN) type indicates a type of PDN connection and includes IPv4, IPv6, IPv4v6, and non-IP. In a case that IPv4 is specified, it indicates that transmission and/or reception of data is performed using IPv4. In a case that IPv6 is specified, it indicates that transmission and/or reception of data is performed using IPv6. In a case that IPv4v6 is specified, it indicates that transmission and/or reception of data is performed using IPv4 or IPv6. In a case that non-IP is specified, it indicates that communication is performed using a communication method other than the IP, not communication using the IP.

Although a Protocol Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using the PDU session.

Note that each apparatus (the UE, and/or the access network apparatus, and/or the core network apparatus) may associate one or multiple pieces of identification information with a PDU session for management. Note that these pieces of identification information may include one or more of a DNN, a QoS rule, a PDU session type, application identification information, NSI identification information, and access network identification information, and may further include other pieces of information. In addition, in a case that multiple PDU sessions are established, pieces of identification information associated with the PDU sessions may have the same or different contents.

The Data Network Name (DNN) may be identification information for identifying the core network and/or an external network such as the DN. The DNN can also be used as information for selecting a gateway such as the PGW_A 30/UPF_A 235 for connecting to the core network B 190. In addition, the DNN may correspond to an Access Point Name (APN).

A Protocol Data Unit/Packet Data Unit (PDU) session type indicates a type of PDU session and includes IPv4, IPv6, Ethernet, and Unstructured. In a case that IPv4 is specified, it indicates that transmission and/or reception of data is performed using IPv4. In a case that IPv6 is specified, it indicates that transmission and/or reception of data is performed using IPv6. In a case that Ethernet is specified, it indicates that transmission and/or reception of an Ethernet frame is performed. Alternatively, Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both of IPv4 and IPv6.

The Public land mobile network (PLMN) is a communication network that provides mobile radio communication services. The PLMN is a network managed by an operator who is a network operator, and the operator can be identified by a PLMN ID. A PLMN that matches a Mobile Network Code (MNC) and a Mobile Country Code (MCC) of an International Mobile Subscriber Identity (IMSI) of the UE may be a Home PLMN (HPLMN). Furthermore, the UE may hold, in the USIM, an Equivalent HPLMN list for identifying one or multiple Equivalent HPLMNs (EPLMNs). A PLMN different from the HPLMN and/or the EPLMN may be a VPLMN (Visited PLMN). A PLMN with which the UE has been successfully registered may be a Registered PLMN (also referred to as a registered PLMN) (RPLMN). Note that a service provided by the PLMN may be referred to as a PLMN service, and a service provided by an SNPN may be referred to as an SNPN service.

In addition, a network slice (NS) is a logical network that provides specific network capability and network characteristics. The UE and/or the network can support the network slice (NW slice (NS)) in the 5GS. The network slice may be referred to simply as a slice.

In addition, a network slice instance (NSI) includes a set of an instance (entity) of a network function (NF) and necessary resources and forms a network slice to be mapped. Here, the NF is a processing function for a network, and is adopted or defined by the 3GPP. The NSI is an entity of one or multiple NSs configured in the core network_B. In addition, the NSI may include a virtual Network Function (NF) generated using a Network Slice Template (NST). Here, the NST is associated with a resource request for provision of a requested communication service and capability, and is a logical expression of one or multiple NFs. In other words, the NSI may be a set of multiple NFs on the core network_B 190. The NSI may be a logical network configured for classifying user data to be delivered depending on a service or the like. In the NS, one or multiple NFs may be configured. Each NF configured in the NS may or may not be an apparatus shared with another NS. The UE and/or the apparatus in the network can be allocated to one or multiple NSs, based on an NSSAI, and/or an S-NSSAI, and/or a UE usage type, and/or registration information such as one or multiple NSI IDs, and/or an APN. Note that the UE usage type is a parameter value included in registration information of the UE, which is used for identifying the NSI. The UE usage type may be stored in the HSS. The AMF may select the SMF and the UPF based on the UE usage type.

In addition, Single Network Slice Selection Assistance Information (S-NSSAI) is information for identifying the NS. The S-NSSAI may include only a Slice/Service type (SST), or may include an SST and a Slice Differentiator (SD). Here, the SST is information indicating an operation of the NS expected in terms of functions and services. In addition, the SD may be information for interpolating an SST in a case that one NSI is selected out of multiple NSIs indicated by the SST. The S-NSSAI may be information unique to each PLMN or may be standard information common to the PLMNs. In addition, a network may store one or multiple pieces of S-NSSAI in the registration information of the UE as default S-NSSAI. Note that, in a case that the S-NSSAI is default S-NSSAI and the UE does not transmit, to a network, valid S-NSSAI in a registration request message, the network may provide an NS related to the UE.

In addition, the Network Slice Selection Assistance Information (NSSAI) is a set of pieces of the S-NSSAI. Each piece of the S-NSSAI included in the NSSAI is information for assisting the access network or the core network to select an NSI. The UE may store the NSSAI allowed by the network for each PLMN. In addition, the NSSAI may be information used for selecting the AMF.

Configured NSSAI is NSSAI supplied and stored in the UE. The UE may store the configured NSSAI for each PLMN. The configured NSSAI may be information configured by the network (or PLMN). The S-NSSAI included in the configured NSSAI may be referred to as configured S-NSSAI. The configured S-NSSAI may include S-NSSAI and mapped S-NSSAI.

Requested NSSAI (also referred to as request NSSAI) is NSSAI provided to the network from the UE during the registration procedure. The requested NSSAI may be allowed NSSAI or configured NSSAI stored by the UE. Specifically, the requested NSSAI may be information indicating a network slice that the UE is to access. The S-NSSAI included in the requested NSSAI may be referred to as requested S-NSSAI. For example, the requested NSSAI is included in a Non-Access-Stratum (NAS) message transmitted from the UE to the network, such as a registration request message or a PDU session establishment request message, or in a Radio Resource Control (RRC) message including the NAS message and then transmitted.

Allowed NSSAI is information indicating one or multiple network slices allowed for the UE. In other words, the allowed NSSAI is information identifying a network slice to which the UE is allowed to connect by the network. As information of the UE, each of the UE and the network stores and manages the allowed NSSAI for each access (3GPP access or non-3GPP access). The S-NSSAI included in the allowed NSSAI may be referred to as an allowed S-NSSAI. The allowed S-NSSAI may include S-NSSAI and mapped S-NSSAI.

Mapped S-NSSAI may be S-NSSAI for the HPLMN mapped to the S-NSSAI for a registered PLMN in a roaming scenario. Basically, the mapped S-NSSAI may be an S-NSSAI used in a case that the UE is roaming, or may be an S-NSSAI not used in a case that the UE is not roaming (also referred to as a case of non-roaming). The UE may store one or multiple mapped S-NSSAIs mapped to the configured NSSAI and the S-NSSAI included in the Allowed NSSAI of each access type. The UE may store one or multiple mapped S-NSSAIs included in the rejected NSSAI, or mapped S-NSSAIs corresponding to the S-NSSAI included in the rejected NSSAI.

Rejected NSSAI is information indicating one or multiple network slices not allowed for the UE. In other words, the rejected NSSAI is information identifying a network slice to which the UE is not allowed to connect by the network. The rejected NSSAI may be information including one or multiple combinations of an S-NSSAI and a reject cause value (hereinafter also referred to as a cause value or a rejection cause). Here, the reject cause value is information indicating why the network rejects the corresponding S-NSSAI. The UE and the network may each appropriately store and manage the rejected NSSAI based on the reject cause value associated with each piece of S-NSSAI. Furthermore, the rejected NSSAI may be included in the NAS message transmitted from the network to the UE, such as a registration accept message, a configuration update command, or a registration reject message, or in an RRC message including a NAS message. The S-NSSAI included in the rejected NSSAI may be referred to as rejected S-NSSAI. Here, the rejected NSSAI may mean one of the first to fourth rejected NSSAIs. The rejected S-NSSAI may mean the rejected S-NSSAI included in one of the first to fourth rejected NSSAIs. The rejected NSSAI may be one of the first to fourth rejected NSSAIs and the pending NSSAI, or may be a combination of these. The S-NSSAI included in the rejected NSSAI may be referred to as rejected S-NSSAI. The rejected S-NSSAI may include the S-NSSAI and the mapped S-NSSAI.

Here, the first rejected NSSAI may be the rejected NSSAI for the current PLMN or SNPN. In other words, the first rejected NSSAI may be the NSSAI not available in the current PLMN or SNPN. The first rejected NSSAI may be a set of one or more S-NSSAIs not available in the current PLMN or SNPN among the S-NSSAIs included in the requested NSSAI by the UE. The first rejected NSSAI may be rejected NSSAI for current PLMN or SNPN in the 5GS. The first rejected S-NSSAI may be rejected S-NSSAI for current PLMN or SNPN, or may be the S-NSSAI included in the rejected NSSAI for current PLMN or SNPN. The first rejected NSSAI may be a rejected NSSAI stored by the UE and/or the NW, or may be a rejected NSSAI transmitted from the NW to the UE. In a case that the first rejected NSSAI is a rejected NSSAI transmitted from the NW to the UE, the first rejected NSSAI may be information including one or multiple combinations of an S-NSSAI and a cause value. The reject cause value may indicate "an S-NSSAI not available in the current PLMN or SNPN", which means that the S-NSSAI associated with the reject cause value is not available in the current PLMN or SNPN.

The first rejected NSSAI may be valid in the entire registered PLMN or registered SNPN. In other words, the UE and/or NW may treat the first rejected NSSAI and the S-NSSAI included in the first rejected NSSAI as information not dependent on the access type. In other words, the first rejected NSSAI may be information valid for 3GPP access and non-3GPP access.

In a case that the UE transitions to a deregistered state on both 3GPP access and non-3GPP access for the current PLMN or SNPN, the UE may delete the first rejected NSSAI from the storage. In other words, in a case that the UE transitions to the deregistered state for the current PLMN or SNPN via one access, or successfully registers with a new PLMN or SNPN via one access, or fails to register with a new PLMN via one access and transitions to the deregistered state, and further that the UE is not registered (deregistered state) via the other access, then the UE may delete the first rejected NSSAI.

The S-NSSAI included in the first rejected NSSAI in the storage unit of the UE may be handled as unavailable in the entire current PLMN or SNPN. In other words, the UE may be in a state of being forbidden from the MM procedure and/or the SM procedure using the S-NSSAI in the entire current PLMN or SNPN.

The second rejected NSSAI may be the rejected NSSAI for the current registration area (also referred to as registration area). In other words, the second rejected NSSAI may be the NSSAI not available in the current registration area. The second rejected NSSAI may be a set of one or multiple S-NSSAIs not available in the current registration area among the S-NSSAIs included in the requested NSSAI by the UE. The second rejected NSSAI may be rejected NSSAI for the current registration area in the 5GS. The second rejected NSSAI may be a rejected NSSAI stored by the UE and/or the NW, or may be a rejected NSSAI transmitted from the NW to the UE. In a case that the second rejected NSSAI is the rejected NSSAI transmitted from the NW to the UE, the second rejected NSSAI may be information including one or multiple combinations of an S-NSSAI and a cause value. The cause value may indicate "an S-NSSAI not available in the current registration area", which means that the S-NSSAI associated with the cause value is not available in the current registration area.

The second rejected NSSAI may be valid in the current registration area. In other words, the UE and/or the NW may treat the second rejected NSSAI and the S-NSSAI included in the second rejected NSSAI as information for each access type. In other words, the second rejected NSSAI may be information valid for each of 3GPP access and non-3GPP access. In other words, once the UE transitions to the deregistered state for one access, the UE may delete the second rejected NSSAI from the storage.

The S-NSSAI included in the second rejected NSSAI in the storage unit of the UE may be handled as unavailable in the current registration area. In other words, the UE may be in a state of being forbidden from the MM procedure and/or the SM procedure using the S-NSSAI in the current registration area.

The third rejected NSSAI is a set of one or multiple S-NSSAIs that require NSSAA and for which the NSSAA fails or is revoked. The third rejected NSSAI may be an NSSAI stored by the UE and/or the NW or may be transmitted from the NW to the UE. In a case that the third rejected NSSAI is transmitted from the NW to the UE, the third rejected NSSAI may be information including one or multiple combinations of an S-NSSAI and a reject cause value. The reject cause value in this case may be "S-NSSAI not available due to failure or revocation of NSSAA (S-NSSAI is not available due to the failed or revoked network slice-specific authorization and authentication)" and may be information indicating that the NSSAA for the S-NSSAI associated with the reject cause value has failed or has been revoked.

The third rejected NSSAI is valid in the entire registered PLMN. In other words, the UE and/or the NW may treat the third rejected NSSAI and S-NSSAI included in the third rejected NSSAI as information not dependent on the access type. In other words, the third rejected NSSAI may be valid information for 3GPP access and non-3GPP access. The third rejected NSSAI may be NSSAI different from the rejected NSSAI. The third rejected NSSAI may be the first rejected NSSAI.

The third rejected NSSAI is a rejected NSSAI allowing the UE to identify the slice that is rejected due to failure or revocation of NSSAA from the core network. Specifically, the UE does not initiate the registration request procedure for the S-NSSAI included in the third rejected NSSAI while storing the third rejected NSSAI. The third rejected NSSAI may be identification information including one or multiple pieces of S-NSSAI received from the core network in association with the reject cause value indicating failure of NSSAA. The third rejected NSSAI is information regardless of the access type. Specifically, in a case that the UE stores the third rejected NSSAI, the UE may not attempt to transmit, either on 3GPP access or on non-3GPP access, a registration request message including the S-NSSAI included in the third rejected NSSAI. Alternatively, the UE can transmit the registration request message including the S-NSSAI included in the third rejected NSSAI, based on a UE policy. Alternatively, the UE may delete the third rejected NSSAI based on the UE policy and transition to a state in which the UE can transmit the registration request message including the S-NSSAI included in the third rejected NSSAI. In other words, in a case that the UE transmits, based on the UE policy, the registration request message including the S-NSSAI included in the third rejected NSSAI, the UE may delete the S-NSSAI from the third rejected NSSAI.

The S-NSSAI included in the third rejected NSSAI in the storage unit of the UE may be handled as unavailable in the entire current PLMN or SNPN. In other words, the UE may be in a state of being forbidden from the MM procedure and/or the SM procedure using the S-NSSAI in the current registration area.

The fourth rejected NSSAI may be the rejected NSSAI for the current tracking area. In other words, the fourth rejected NSSAI may be the NSSAI not available in the current tracking area.

The fourth rejected NSSAI may be the rejected NSSAI for the current tracking area in the current registration area. In other words, the fourth rejected NSSAI may be the NSSAI not available in the current tracking area in the current registration area.

In addition, the fourth rejected NSSAI may be the NSSAI not available in the current tracking area in the current registration area, and the NSSAI available in another tracking area in the current registration area.

The fourth rejected NSSAI may be the NSSAI not available in the current tracking area in the current registration area, and the NSSAI available in another tracking area in the current registration area, and another registration area (different from the current registration area).

The fourth rejected NSSAI may be a set of S-NSSAIs included in the requested NSSAI by the UE, and a set of S-NSSAIs not available in the current tracking area or S-NSSAIs transmitted using the rejection cause indicating that the S-NSSAI is not available in the current tracking area by the AMF.

In the roaming scenario (during roaming), the fourth rejected NSSAI may include one or more S-NSSAIs for the current PLMN, and may include a set of mapped S-NSSAIs in a case of being available.

The fourth rejected NSSAI may be a rejected NSSAI stored by the UE and/or the NW, or may be a rejected NSSAI transmitted from the NW to the UE. In a case that the fourth rejected NSSAI is a rejected NSSAI transmitted from the NW to the UE, the fourth rejected NSSAI may be information including one or multiple combinations of an S-NSSAI and a cause value. The cause value may be 12th identification information.

In addition, the fourth rejected NSSAI may be valid for 3GPP access and/or non-3GPP access. In other words, the UE and/or the NW may handle the fourth rejected NSSAI as that not dependent on the access type, or may handle the fourth rejected NSSAI as that dependent on the access type. In still other words, the UE and/or the NW may manage and/or store the fourth rejected NSSAI for each access type, or need not manage and/or store the fourth rejected NSSAI for each access type.

Here, the fact that the fourth rejected NSSAI is not dependent on the access type may mean that, for example, in a case that the UE receives the fourth rejected NSSAI via the 3GPP access, the fourth rejected NSSAI or the S-NSSAI included in the fourth rejected NSSAI is not only unavailable via the 3GPP access but also unavailable via the non-3GPP access. Similarly, in a case that the UE receives the fourth rejected NSSAI via the non-3GPP access, this may mean that the fourth rejected NSSAI or the S-NSSAI included in the fourth rejected NSSAI is not only unavailable via the 3GPP access but also unavailable via the non-3GPP access. Note that, in a case that the fourth rejected NSSAI is not dependent on the access type, the UE and/or the NW desirably does not store the fourth rejected NSSAI for each access type (that is, does not store the fourth rejected NSSAI separately for each access type but simply stores the fourth rejected NSSAI), but the present invention is not limited to this.

In addition, the case where the fourth rejected NSSAI is dependent on the access type may mean that, for example, in a case that the UE receives the fourth rejected NSSAI via the 3GPP access, the fourth rejected NSSAI or the S-NSSAI included in the fourth rejected NSSAI is unavailable via the 3GPP access, but need not mean that the fourth rejected NSSAI or the S-NSSAI included in the fourth rejected NSSAI is unavailable via the non-3GPP access. In other words, this may mean that the use of the fourth rejected NSSAI or the S-NSSAI included in the fourth rejected NSSAI via the non-3GPP access is not limited. Similarly, in a case that the UE receives the fourth rejected NSSAI via the non-3GPP access, this may mean that the fourth rejected NSSAI or the S-NSSAI included in the fourth rejected NSSAI is unavailable via the non-3GPP access, but need not mean that the fourth rejected NSSAI or the S-NSSAI included in the fourth rejected NSSAI is unavailable via the 3GPP access. In other words, this may mean that the use of the fourth rejected NSSAI or the S-NSSAI included in the fourth rejected NSSAI via the 3GPP access is not limited. Note that, in a case that the fourth rejected NSSAI is dependent on the access type, the UE and/or the NW desirably stores the fourth rejected NSSAI for each access type (that is, stores the fourth rejected NSSAI for each access type), but the UE and/or the NW may perform some behaviors other than these behaviors.

In a case that the UE does not have any valid registration area and/or tracking area, the fourth rejected NSSAI may be applicable to a registration area and/or tracking area for which the rejected NSSAI has been received.

In a case that the current registration area or the current tracking area in the current registration area includes a Tracking Area Identity (TAI) belonging to a PLMN or SNPN different from the current PLMN or SNPN, and the current PLMN or SNPN and the different PLMN or SNPN are in an equivalent PLMN or equivalent SNPN relationship, the fourth rejected NSSAI may be applied to these PLMNs or SNPNs in the current registration area and/or the current tracking area. In other words, in the current registration area or the current tracking area, the fourth rejected NSSAI may be applied not only to the current PLMN or SNPN but also to the equivalent PLMN or equivalent SNPN.

In a case that the S-NSSAI that the UE includes in the requested NSSAI is the fourth rejected NSSAI, the AMF may reject the registration request message.

In a case that the 5GS registration type indicates mobility registration updating, the purpose of initiating the registration procedure is not to change the network slice with which the UE is currently registered, and the UE is in the current registration area or the current tracking area, the UE need not include the requested NSSAI in the registration procedure.

In addition, the S-NSSAI included in the fourth rejected NSSAI (also referred to as fourth rejected S-NSSAI) may be associated with one or more tracking areas in which the rejected S-NSSAI (fourth rejected S-NSSAI) is not available.

In addition, in a case of being provided with new configured NSSAI for the current PLMN or SNPN, the UE may replace the stored configured NSSAI with the new configured NSSAI. In this case, the UE may further delete the mapped S-NSSAI for the stored configured NSSAI and store the mapped S-NSSAI for the new configured NSSAI, may further delete the stored fourth rejected NSSAI, or may further delete the S-NSSAI included in the mapped S-NSSAI for the new configured NSSAI for the current PLMN or SNPN, from the mapped S-NSSAI for the stored fourth rejected NSSAI.

In addition, in a case of receiving new allowed NSSAI for the current PLMN or SNPN, the UE may delete, from the stored fourth rejected NSSAI, the S-NSSAI included in the new allowed NSSAI. In this case, the UE may further delete, from the mapped S-NSSAI for the stored fourth rejected NSSAI, the S-NSSAI included in the mapped S-NSSAI for the new allowed NSSAI for the current PLMN or SNPN.

In addition, in a case of receiving the S-NSSAI (fourth rejected S-NSSAI) included in the rejected NSSAI (fourth rejected NSSAI) included in the registration accept message, or the registration reject message, or a de-registration request message, or a configuration update command message, the UE may store, based on the rejection cause, the received fourth rejected S-NSSAI in the rejected NSSAI and the mapped S-NSSAI for the rejected NSSAI, or in the fourth rejected NSSAI and the mapped S-NSSAI for the fourth rejected NSSAI, in the UE.

Further, in a case that the UE receives the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Extended rejected NSSAI IE, the UE may delete the S-NSSAI (fourth rejected S-NSSAI) included in the fourth rejected NSSAI associated with the same access type from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case of receiving, during non-roaming, the S-NSSAI (fourth rejected S-NSSAI) included in the rejected NSSAI (fourth rejected NSSAI) included in the registration accept message, or the registration reject message, or the de-registration request message, or the configuration update command message, the UE may delete the S-NSSAI included in the mapped S-NSSAI for the fourth rejected NSSAI associated with the same access type, from the allowed NSSAI, stored in the UE, for the current PLMN or SNPN and the equivalent PLMN or equivalent SNPN of the current PLMN or SNPN.

Further, in a case of receiving, during roaming, the S-NSSAI (fourth rejected S-NSSAI) included in the rejected NSSAI (fourth rejected NSSAI) included in the registration accept message, or the registration reject message, or the de-registration request message, or the configuration update command message, the UE may delete the S-NSSAI included in the mapped S-NSSAI for the fourth rejected NSSAI associated with the same access type from the mapped S-NSSAI for the allowed NSSAI stored in the UE.

Further, in a case that the UE receives the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Extended rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (the fourth rejected S-NSSAI) included in the rejected NSSAI (the fourth rejected NSSAI) included in the registration accept message, or the registration reject message, or the de-registration request message, or the configuration update command message, and the S-NSSAI is included in the Extended rejected NSSAI IE, the UE may delete the S-NSSAI included in the mapped S-NSSAI for the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during roaming, the S-NSSAI (fourth rejected S-NSSAI) included in the rejected NSSAI (fourth rejected NSSAI) included in the registration accept message, or the registration reject message, or the de-registration request message, or the configuration update command message, and the S-NSSAI is included in the Extended rejected NSSAI IE, the UE may delete the S-NSSAI included in the mapped S-NSSAI for the fourth rejected NSSAI associated with the same access type, from the mapped S-NSSAI, stored in the UE, for the pending NSSAI.

In addition, in a case of deregistering over an access which is the access over which the UE receives the fourth rejected NSSAI or the fourth rejected S-NSSAI, in other words, in a case of completing a de-registration procedure over the access, the UE may delete the fourth rejected NSSAI and/or the access type of the fourth rejected NSSAI stored in the UE.

In a case of moving from the tracking area in which the fourth rejected NSSAI or the fourth rejected S-NSSAI has been received to another tracking area, the UE may delete the fourth rejected NSSAI and/or the access type of the fourth rejected NSSAI stored in the UE.

In a case of transitioning from the 5GMM-REGISTERED state to the 5GMM-DEREGISTERED state or transitioning from the 5GMM-DEREGISTERED state to the 5GMM-REGISTERED state, the UE may delete the fourth rejected NSSAI and/or the access type of the fourth rejected NSSAI stored in the UE.

In a case of receiving the fourth rejected NSSAI included in the registration accept message, the registration reject message, the configuration update command message, or the de-registration request message, the UE may perform an operation based on the rejection cause included in the rejected S-NSSAI (fourth rejected S-NSSAI) included in the fourth rejected NSSAI. Specifically, in a case that the rejection cause included in the rejected S-NSSAI indicates "S-NSSAI not available in the current tracking area" and/or "S-NSSAI not available in the current tracking area in the current registration area" and/or "No NSs available (No network slices available)", the UE may be forbidden from using the fourth S-NSSAI in the current tracking area. In other words, the UE may be in a state of being forbidden from the MM procedure and/or the SM procedure using the fourth S-NSSAI in the current tracking area.

Note that, in a case that the UE is powered off, that the UE moves out of the current tracking area, that the UICC including the USIM is removed from the UE, or that the fourth rejected NSSAI or the fourth rejected S-NSSAI stored in the UE is deleted, the regulation may be canceled. In other words, the UE may be allowed to perform the MM procedure and/or the SM procedure using the fourth S-NSSAI in the current tracking area.

In a case of transmitting the registration request message including the requested NSSAI, the UE may select the S-NSSAI included in the requested NSSAI from among the stored pieces of S-NSSAI other than the S-NSSAI included in the fourth rejected NSSAI (the fourth rejected S-NSSAI) and/or the S-NSSAI included in the mapped S-NSSAI for the fourth rejected NSSAI.

In a case that the UE transmits a registration request message including capability information indicating that the NSSAA is not supported and the requested NSSAI and that the S-NSSAI included in the requested NSSAI is S-NSSAI related to NSSAA, the AMF may transmit a registration accept message including rejected NSSAI including the S-NSSAI and a rejection cause indicating "S-NSSAI not available in the current tracking area" and/or "S-NSSAI not available in the current tracking area in the current registration area" and/or "No NSs available (No network slices available)".

The fourth rejected S-NSSAI may be not only rejected S-NSSAI included in the fourth rejected NSSAI but also rejected S-NSSAI not included in the fourth rejected NSSAI. The above description related to the fourth rejected NSSAI may be interpreted as the description related to the fourth rejected S-NSSAI.

The fourth rejected NSSAI and the fourth rejected S-NSSAI may be included as the LADN information included in the registration accept message or the configuration update command and notified from the core network side to the UE.

The mapped S-NSSAI for the fourth rejected NSSAI may be the mapped S-NSSAI corresponding to the fourth rejected NSSAI. In other words, the mapped S-NSSAI for the fourth rejected NSSAI may be S-NSSAI for the HPLMN mapped to the S-NSSAI for a registered PLMN (that is, S-NSSAI included in the fourth rejected NSSAI, or fourth rejected S-NSSAI) in a roaming scenario.

The mapped S-NSSAI for the fourth rejected NSSAI may be valid for the 3GPP access and/or non-3GPP access. In other words, the UE and/or the NW may handle the mapped S-NSSAI for the fourth rejected NSSAI as that not dependent on the access type, or may handle the mapped S-NSSAI for the fourth rejected NSSAI as that dependent on the access type. In still other words, the UE and/or the NW may manage and/or store the mapped S-NSSAI for the fourth rejected NSSAI for each access type, or need not manage and/or store the mapped S-NSSAI for the fourth rejected NSSAI for each access type.

Here, the fact that the mapped S-NSSAI for the fourth rejected NSSAI is not dependent on the access type may mean that, for example, in a case that the UE receives the mapped S-NSSAI for the fourth rejected NSSAI via the 3GPP access, the mapped S-NSSAI for the fourth rejected NSSAI is not only unavailable via the 3GPP access but also unavailable via the non-3GPP access. Similarly, in a case that the UE receives the mapped S-NSSAI for the fourth rejected NSSAI via the non-3GPP access, this may mean that the mapped S-NSSAI for the fourth rejected NSSAI is not only unavailable via the 3GPP access but also unavailable via the non-3GPP access. Note that, in a case that the mapped S-NSSAI for the fourth rejected NSSAI is not dependent on the access type, the UE and/or the NW desirably does not store the mapped S-NSSAI for the fourth rejected NSSAI for each access type (that is, does not store the mapped S-NSSAI for the fourth rejected NSSAI separately for each access type but simply stores the fourth rejected NSSAI), but the present invention is not limited to this.

In addition, the case where the mapped S-NSSAI for the fourth rejected NSSAI is dependent on the access type may mean that, for example, in a case that the UE receives the mapped S-NSSAI for the fourth rejected NSSAI via the 3GPP access, the mapped S-NSSAI for the fourth rejected NSSAI is unavailable via the 3GPP access, but need not mean that, in this case, the mapped S-NSSAI for the fourth rejected NSSAI is unavailable via the non-3GPP access. In other words, this may mean that, the use of the mapped S-NSSAI for the fourth rejected NSSAI via the non-3GPP access is not limited. Similarly, in a case that the UE receives the mapped S-NSSAI for the fourth rejected NSSAI via the non-3GPP access, this may mean that the mapped S-NSSAI for the fourth rejected NSSAI is unavailable via the non-3GPP access, but need not mean that the mapped S-NSSAI for the fourth rejected NSSAI is unavailable via the 3GPP access. In other words, this may mean that, the use of the mapped S-NSSAI for the fourth rejected NSSAI via the 3GPP access is not limited. Note that, in a case that the mapped S-NSSAI for the fourth rejected NSSAI is dependent on the access type, the UE and/or the NW desirably stores the mapped S-NSSAI for the fourth rejected NSSAI for each access type (that is, stores the fourth rejected NSSAI for each access type), but the UE and/or the NW may perform some behaviors other than these behaviors.

The fourth rejected NSSAI, and/or the fourth rejected S-NSSAI, and/or the S-NSSAI included in the mapped S-NSSAI for the fourth rejected NSSAI in the storage unit of the UE may be handled as unavailable in the current tracking area or in the current tracking area in the current registration area. In other words, the UE may be in a state of being forbidden from the MM procedure and/or the SM procedure using the S-NSSAI in the current tracking area or in the current tracking area in the current registration area. In other words, the UE may be in a state of not being forbidden from the MM procedure and/or the SM procedure using the S-NSSAI in a tracking area other than the current tracking area or in a tracking area other than the current tracking area in the current registration area.

The pending NSSAI (also referred to as pending NSSAI or Pending NSSAI) is a set of one or multiple S-NSSAIs that require network slice specific authentication by the network, for which the network slice specific authentication has not completed yet, and that are not available in the current PLMN. The pending NSSAI may be a Rejected NSSAI due to NSSAA or a pending NSSAI of the 5GS. The pending NSSAI may be an NSSAI stored by the UE or the NW and may be an NSSAI transmitted from the NW to the UE. Note that the pending NSSAI is not limited to the rejected NSSAI and may be an NSSAI independent of the rejected NSSAI. In a case that the pending NSSAI is an NSSAI transmitted from the NW to the UE, the pending NSSAI may be information including one or multiple combinations of an S-NSSAI and a reject cause value. The reject cause value in this case may be "S-NSSAI pending for NSSAA (NSSAA is pending for the S-NSSAI)" or may be information indicating that the UE is forbidden from or pending using the S-NSSAI associated with the reject cause value until NSSAA for the S-NSSAI completes.

The pending NSSAI is valid in the entire registered PLMN. In other words, the UE and/or the NW may treat the third rejected NSSAI and the S-NSSAI included in the pending NSSAI as information not dependent on the access type. In other words, the pending NSSAI may be information valid for 3GPP access and non-3GPP access. The pending NSSAI may be NSSAI different from the rejected NSSAI. The pending NSSAI may be the first rejected NSSAI.

The pending NSSAI is the NSSAI including one or multiple S-NSSAIs allowing the UE to identify the slice in which the procedure is pending. Specifically, while storing the pending NSSAI, the UE does not initiate the registration request procedure for the S-NSSAI included in the pending NSSAI. In other words, the UE does not use the S-NSSAI included in the pending NSSAI during the registration procedure until NSSAA for the S-NSSAI included in the pending NSSAI is completed. The pending NSSAI is identification information including one or multiple S-NSSAIs received from the core network in association with the reject cause value indicating pending for NSSAA. The pending NSSAI is information regardless of the access type. Specifically, in a case that the UE stores the pending NSSAI, the UE does not attempt to transmit, either on 3GPP access or on non-3GPP access, a registration request message including the S-NSSAI included in the pending NSSAI.

A tracking area is a single or multiple ranges that can be expressed using location information of the UE_A 10 managed by the core network. The tracking area may include multiple cells. Furthermore, the tracking area may be a range in which a control message such as paging is broadcast, or may be a range in which the UE_A 10 can move without performing a handover procedure. Furthermore, the tracking area may be a routing area, may be a location area, or may be any area similar to these. The tracking area may be hereinafter a TA. The tracking area may be identified by a Tracking Area Identity (TAI) including a Tracking area code (TAC) and the PLMN.

The registration area (also referred to as Registration area or registration area) is a set of one or multiple TAs allocated to the UE by the AMF. Note that, while moving within one or multiple TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified with a TAI list including one or multiple TAIs.

A UE ID is information for identifying the UE. Specifically, the UE ID may be a SUbscriptionConcealed Identifier (SUCI), or a Subscription Permanent Identifier (SUPI), or a Globally Unique Temporary Identifier (GUTI), or an International Mobile Subscriber Identity (IMEI), or an IMEI Software Version (IMEISV), or a Temporary Mobile Subscriber Identity (TMSI), for example. Alternatively, the UE ID may be other information configured by an application or within the network. Moreover, the UE ID may be information for identifying the user.

Network Slice-Specific Authentication and Authorization (NSSAA) is a function for implementing network slice specific authentication and authorization. The network slice-specific authentication and authorization allows the UE to be authenticated and authorized outside the core network, such as in a 3rd Party. The PLMN and the network apparatus having the NSSAA function can perform an NSSAA procedure for a certain S-NSSAI, based on registration information of the UE. Furthermore, the UE having the NSSAA function can manage and store the rejected NSSAI for pending for NSSAA and/or the rejected NSSAI for failure of NSSAA. In the present application, NSSAA may be referred to as a network slice-specific authentication and authorization procedure or an authentication and authorization procedure.

The S-NSSAI that requires NSSAA is S-NSSAI that requires NSSAA managed by the core network and/or the core network apparatus. The core network and/or the core network apparatus may store the S-NSSAI that requires NSSAA by associating the S-NSSAI with information indicating whether NSSAA is required. Furthermore, the core network and/or the core network apparatus may store the S-NSSAI requiring the NSSAA in association with information indicating whether NSSAA has completed or information indicating that NSSAA has completed and been allowed or succeeded. The core network and/or the core network apparatus may manage the S-NSSAI requiring NSSAA as information unrelated to the access network.

The UE in a single registration mode has only one active MM state. In other words, the UE in the single registration mode is active only in either the RM state (5GMM state) in the 5GC or the EMM state in the EPC. The UE in the single registration mode is in a 5GC NAS mode in a case of connecting to the 5GC, and is in an EPC NAS mode in a case of connecting to the EPC. The UE in the single registration mode can be registered with only either the 5GC or the EPC, and thus needs to perform mapping between an EPS-GUTI (also referred to as a 4G-GUTI) and a 5G-GUTI in movement between the EPC and the 5GC.

The UE in a dual registration mode may be in a state in which the UE can be independently registered with the 5GC and the EPC. The UE in the dual registration mode can independently maintain the 5G-GUTI and the EPS-GUTI (also referred to as a 4G-GUTI).

The SNPN is a type of NPN being a 5GS deployed for non-public use and is an NPN that is operated by an NPN operator and that is not dependent on the NF provided by the PLMN. The SNPN is identified by a combination of a PLMN ID and a Network Identifier (NID). The UE that can use the SNPN may support an SNPN access mode (also referred to as an SNPN access operation mode). The UE configured to operate in the SNPN access mode may be able to select the SNPN and be registered with the SNPN or need not be able to select the PLMN. The UE configured to operate in the SNPN access mode may be able to perform an SNPN selection procedure or need not be able to perform a PLMN selection procedure. The UE not configured to operate in the SNPN access mode although the UE can use the SNPN (SNPN enabled) need not be able to select the SNPN and be registered with the SNPN or may be able to select the PLMN. The UE not configured to operate in the SNPN access mode need not be able to perform the SNPN selection procedure or may be able to perform the PLMN selection procedure.

The UE operating in the SNPN access mode may be able to select the SNPN via Uu (3GPP access). The UE operating in the SNPN access mode may be able to select the SNPN via Uu or NWu established via a PDU session provided by the PLMN selected via Uu or NWu (non-3GPP access). The UE not operating in the SNPN access mode may be able to select the PLMN via Uu or NWu established via a PDU session provided by the SNPN selected via Uu or NWu (non-3GPP access).

Note that the SNPN access mode may be managed and/or applied in each access. In other words, the SNPN access mode may be managed and/or applied separately for the 3GPP access and the non-3GPP access. In other words, activation or deactivation of the SNPN access mode for 3GPP access and activation or deactivation of the SNPN access mode for non-3GPP access may be independent of each other. In other words, in a case that the SNPN access mode for 3GPP access is activated, the SNPN access mode for non-3GPP access may be activated or may be deactivated. In a case that the SNPN access mode for 3GPP access is deactivated, the SNPN access mode for non-3GPP access may be activated or may be deactivated.

Here, the SNPN access mode for 3GPP access may also be referred to as the SNPN access mode over 3GPP access or the SNPN access mode via 3GPP access.

The SNPN access mode for non-3GPP access may be referred to as the SNPN access mode over non-3GPP access or the SNPN access mode via non-3GPP access.

"To activate" may be interpreted as "to operate", and "to deactivate" may be interpreted as "not to operate". In other words, activation of the SNPN access mode for 3GPP access may mean to operate in the SNPN access mode for 3GPP access. Deactivation of the SNPN access mode for 3GPP access may mean not to operate in the SNPN access mode for 3GPP access. Activation of the SNPN access mode for non-3GPP access may mean to operate in the SNPN access mode for non-3GPP access. Deactivation of the SNPN access mode for non-3GPP access may mean not to operate in the SNPN access mode for non-3GPP access.

In a case that the UE roams between SNPNs, the SNPNs may be classified into a Home SNPN (also referred to as an HSNPN) and a Visited SNPN (also referred to as a VSNPN). Note that, in a case that the UE does not roam between the SNPNs, the SNPNs may be handled as being the same as the Home SNPN.

The Home SNPN may be an SNPN in which the UE can be registered as a home. The Home SNPN may be an SNPN that the UE selects first in SNPN selection. The Home SNPN may be an SNPN in which at least a part of information included in an SNPN identity (also referred to as an SNPN ID) matches at least a part of information included in an IMSI of the UE. The Home SNPN may be an SNPN in which the MCC and the MNC included in a PLMN Identity (also referred to as a PLMN ID) included in an SNPN identity (also referred to as an SNPN ID) match the MCC and the MNC included in the IMSI of the UE.

The Visited SNPN may be an SNPN in which the UE can be registered as other than a home. The Visited SNPN may be an SNPN in which the UE is not registered as a home. The Visited SNPN may be an SNPN that the UE does not select first in SNPN selection. The Visited SNPN may be an SNPN in which at least a part of information included in the SNPN identity (also referred to as an SNPN ID) does not match at least a part of information included in the IMSI of the UE. The Visited SNPN may be an SNPN in which the MCC and the MNC included in the PLMN Identity (also referred to as a PLMN ID) included in the SNPN identity (also referred to as an SNPN ID) do not match the MCC and the MNC included in the IMSI of the UE.

An equivalent HSNPN (also referred to as an equivalent Home SNPN or an EHSNPN) may be an SNPN considered to be equivalent to the current SNPN (here, the Home SNPN (also referred to as an HSNPN)) in SNPN selection, and/or cell selection, and/or cell reselection. The equivalent HSNPN may be one or more SNPNs included in an equivalent HSNPN list or may be one or more SNPNs not included in an equivalent VSNPN list.

An equivalent VSNPN (also referred to as an equivalent Visited SNPN or an EVSNPN) may be an SNPN considered to be equivalent to the current SNPN (here, the Visited SNPN (also referred to as a VSNPN)) in SNPN selection, and/or cell selection, and/or cell reselection. The equivalent VSNPN may be one or more SNPNs included in the equivalent VSNPN list or may be one or more SNPNs not included in the equivalent HSNPN list.

An equivalent SNPN (also referred to as an ESNPN) may be a concept including the equivalent HSNPN and/or the equivalent VSNPN. In other words, the ESNPN may indicate the equivalent HSNPN and/or the equivalent VSNPN.

The SNPN with which the UE has been successfully registered may be a Registered SNPN (also referred to as a registered SNPN) (RSNPN).

Next, in the present embodiment, identification information transmitted and/or received and stored and/or managed by each apparatus will be described.

First, the 1st identification information is information indicating the network slice with which the UE desires to register. In addition, the 1st identification information may be Requested NSSAI (also referred to as a Requested NSSAI IE), and may be NSSAI provided by the UE to the PLMN in a case of registering with the network. In addition, the 1st identification information may include one or more pieces of S-NSSAI. The S-NSSAI included in the 1st identification information may be S-NSSAI included in configured NSSAI associated with the current PLMN, or may be S-NSSAI included in allowed NSSAI associated with the current PLMN. In other words, the 1st identification information may be S-NSSAI included in the configured NSSAI associated with one or more current PLMNs, or S-NSSAI included in the allowed NSSAI associated with one or more current PLMNs, or a combination of the two described above. More specifically, the allowed NSSAI associated with the current PLMN may be allowed NSSAI associated with the current PLMN and the current access type.

The S-NSSAI included in the 1st identification information may be S-NSSAI not included in the rejected NSSAI and/or the pending NSSAI. The S-NSSAI included in the 1st identification information may be the S-NSSAI for which the associated back-off timer is not running.

The 1st identification information may not be the Requested NSSAI but may be the S-NSSAI (requested S-NSSAI) included in the Requested NSSAI. In this case, one or more pieces of the 1st identification information may constitute the Requested NSSAI.

The 1st identification information may include at least one piece of identification information out of 2nd identification information and 3rd identification information.

The 2nd identification information is UE capability information. The 2nd identification information may be 5GMM capability. In addition, the 2nd identification information may be information indicating whether the UE supports the Extended rejected NSSAI (also referred to as the Extended rejected NSSAI IE). In addition, the 2nd identification information may be information indicating whether the UE supports a function for the fourth rejected NSSAI, and/or the fourth rejected S-NSSAI, and/or the mapped S-NSSAI for the fourth rejected NSSAI. In addition, the 2nd identification information may be information indicating whether the UE supports the NSSAA.

The 2nd identification information may include at least one piece of identification information out of the 1st identification information and the 3rd identification information.

The 3rd identification information is information indicating a request from the UE. The 3rd identification information may be information indicating whether the UE desires to use the function for the fourth rejected NSSAI, and/or the fourth rejected S-NSSAI, and/or the mapped S-NSSAI for the fourth rejected NSSAI. The 3rd identification information may be information indicating a request for provision of information regarding whether an available tracking area and an unavailable tracking area are present in the current registration area.

The 3rd identification information may include at least one piece of identification information out of the 1st identification information and the 2nd identification information.

The 4th identification information may include at least one piece of identification information out of the 1st identification information to the 3rd identification information.

The 11th identification information may be information indicating a network slice. The 11th identification information may be S-NSSAI. The 11th identification information may be included in the allowed NSSAI, and/or the rejected NSSAI, and/or the pending NSSAI, and/or the configured NSSAI that are transmitted from the network, or may be transmitted, as information different from the NSSAI described above, from the network.

The 11th identification information may be NSSAI. The 11th identification information may be the allowed NSSAI, or the rejected NSSAI, or the pending NSSAI, or the configured NSSAI, or NSSAI different from the NSSAI described above.

In addition, the 11th identification information may be the fourth rejected NSSAI, and/or the fourth rejected S-NSSAI, and/or the mapped S-NSSAI for the fourth rejected NSSAI. In addition, in a case that the 11th identification information is the fourth rejected S-NSSAI and/or the mapped S-NSSAI for the fourth rejected NSSAI, the 11th identification information may be included in the allowed NSSAI, and/or the rejected NSSAI, and/or the pending NSSAI, and/or the configured NSSAI.

The 11th identification information may include at least one piece of identification information out of the 12th identification information and the 13th identification information.

The 12th identification information may be a cause value. The 12th identification information may indicate one or more pieces of S-NSSAI that are not available in the current tracking area. The 12th identification information may indicate that one or more pieces of S-NSSAI are not available in the current tracking area. The 12th identification information may indicate one or more pieces of S-NSSAI that are not available in the current tracking area in the current registration area. The 12th identification information may indicate that one or more pieces of S-NSSAI are not available in the current tracking area in the current registration area. The 12th identification information may indicate one or more pieces of S-NSSAI that are not available in the current tracking area in the current registration area but that are available in another tracking area in the current registration area. The 12th identification information may indicate that one or more pieces of S-NSSAI are not available in the current tracking area in the current registration area but are available in another tracking area in the current registration area. Note that one or more pieces of S-NSSAI described above may be one or more pieces of S-NSSAI indicated by the 11th identification information or one or more pieces of S-NSSAI included in the NSSAI indicated by the 11th identification information. In other words, the 11th identification information and the 12th identification information may correspond to each other.

The 12th identification information may indicate NSSAI not available in the current tracking area. The 12th identification information may indicate that the NSSAI is not available in the current tracking area. The 12th identification information may indicate the NSSAI not available in the current tracking area in the current registration area. The 12th identification information may indicate that the NSSAI is not available in the current tracking area in the current registration area. The 12th identification information may indicate the NSSAI that is not available in the current tracking area in the current registration area but that is available in another tracking area in the current registration area. The 12th identification information may indicate that the NSSAI is not available in the current tracking area in the current registration area but is available in another tracking area in the current registration area. Note that the NSSAI may be NSSAI indicated by the 11th identification information. In other words, the 11th identification information and the 12th identification information may correspond to each other.

The 12th identification information may indicate No network slices (NSs) available, may indicate a Tracking area not allowed, or may indicate a tracking area not available.

The 12th identification information may be included in a 5G Mobility Management (5GMM) cause (also referred to as a 5GMM cause value or a 5GMM rejection cause) or may be included in a cause (also referred to as a rejection cause) different from the 5GMM cause. The 12th identification information may be included in the rejected NSSAI (also referred to as the rejected NSSAI IE) and/or the Extended rejected NSSAI IE.

The 12th identification information may include at least one piece of identification information out of the 11th identification information and the 13th identification information.

The 13th identification information may be information indicating a network slice. The 13th identification information may be S-NSSAI. The 13th identification information may be included in the allowed NSSAI, and/or the rejected NSSAI, and/or the pending NSSAI, and/or the configured NSSAI that are transmitted from the network, or may be transmitted, as information different from the NSSAI described above, from the network. The 13th identification information may include the mapped S-NSSAI for the configured NSSAI.

The 13th identification information may be NSSAI. The 13th identification information may be the allowed NSSAI, or the rejected NSSAI, or the pending NSSAI, or the configured NSSAI, or NSSAI different from the NSSAI described above.

The 13th identification information may be the first to the third rejected NSSAI, and/or the first to the third rejected S-NSSAI, and/or the mapped S-NSSAI for the first to the third rejected NSSAI. In a case that the 13th identification information is the first to the third rejected S-NSSAI and/or the mapped S-NSSAI for the first to the third rejected NSSAI, the 13th identification information may be included in the allowed NSSAI, and/or the rejected NSSAI, and/or the pending NSSAI, and/or the configured NSSAI.

The 13th identification information may include at least one piece of identification information out of the 11th identification information and the 12th identification information.

The 14th identification information may include at least one piece of identification information out of the 11th identification information to the 13th identification information.

Note that the 1st identification information to the 4th identification information and the 11th identification information to the 14th identification information may be information stored in advance in the UE, and/or the base station, and/or the AMF, and/or a core network apparatus other than the AMF. A portion of these pieces of identification information may be stored in advance, and any of the pieces of identification information may be stored in association with transmission and/or reception of the identification information.

### 3. First Embodiment

First, procedures used in a first embodiment will be described. The procedures used in the first embodiment include a Registration procedure, a Configuration update procedure, a De-registration procedure, and the like. Hereinafter, each of the procedures will be described.

Note that, in the first embodiment, a case will be described as an example in which each of the combinations including the HSS and the UDM, the PCF and the PCRF, the SMF and the PGW-C, and the UPF and the PGW-U is configured as one and the same apparatus/function (that is, one and the same physical hardware, or one and the same logical hardware, or one and the same software) as illustrated in FIG. 2. However, the details described in the present embodiment can also be applied to a case that each of the combinations is configured as different apparatuses/functions (that is, different pieces of physical hardware, or different pieces of logical hardware, or different pieces of software). For example, between the apparatuses/functions, data may be directly transmitted and/or received, data may be transmitted and/or received via an N26 interface between the AMF and the MME, or data may be transmitted and/or received via the UE.

### 3.1. Registration Procedure

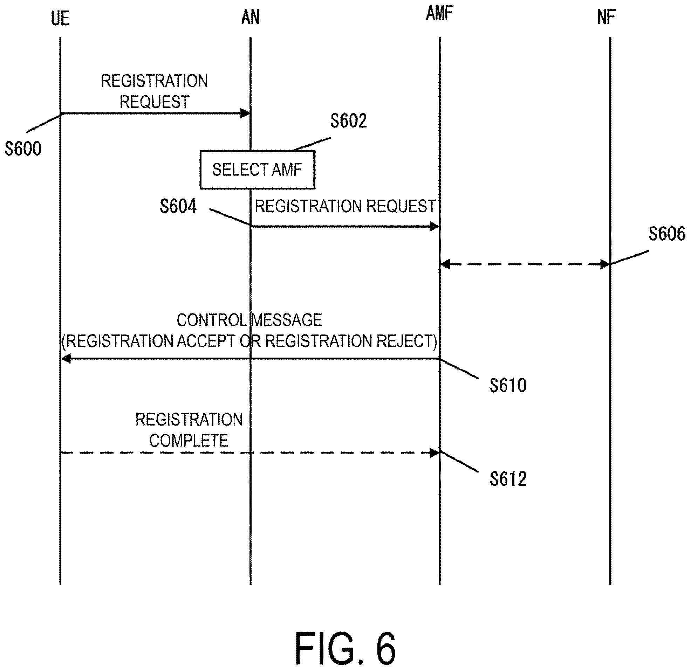

Now, the Registration procedure will be described with reference to FIG. 6. In this section, the registration procedure may be simply referred to as the present procedure. The registration procedure is a procedure for registration with the access network_B, and/or the core network_B, and/or the DN initiated by the UE. In a case that the UE is in a state of not being registered with the network, for example, the UE can perform the present procedure at any timing, for example, a power input time. In other words, the UE can initiate the present procedure at any timing as long as the UE is in the deregistered state
(5GMM-DEREGISTERED state). In addition, each apparatus (in particular, the UE and the AMF) can transition to the registered state (5GMM-REGISTEDED state), based on completion of the registration procedure. Note that each registered state may be managed by each apparatus for each access. Specifically, each apparatus may independently manage the registration state (registered state or deregistered state) for 3GPP access and the registration state for non-3GPP access.

Further, the registration procedure may be a procedure for updating position registration information of the UE on the network, and/or periodically notifying the state of the UE from the UE to the network, and/or updating a specific parameter related to the UE in the network.

The UE may initiate the registration procedure in a case of moving to a TA outside the current registration area. In other words, the UE may initiate a registration procedure in a case where the UE has moved to a TA different from TAs indicated in a stored TA list. In addition, the UE may initiate the registration procedure in a case that a context of each apparatus needs to be updated due to disconnection and deactivation of a PDU session. In addition, in a case that there is a change in capability information and/or a preference, related to PDU session establishment, of the UE, the UE may initiate the registration procedure. In addition, the UE may periodically initiate the registration procedure. Further, the UE may initiate the registration procedure, based on completion of the registration procedure, completion of the PDU session establishment procedure, or information received from the network in each procedure. The UE may initiate the present procedure after performing the procedures in Sections 3.1 to 3.3 one or more times. Note that the UE is not limited to this configuration, and can perform the registration procedure at any timing.

The present procedure may be performed in the PLMN (HPLMN or VPLMN), or the equivalent PLMN, or the SNPN, or the equivalent SNPN.

Note that the above-described procedure for the UE to transition from the state (deregistered state) of not being registered with the network to the state (registered state) of being registered with the network may be an initial registration procedure or a registration procedure for initial registration. The registration procedure performed in the state (registered state) in which the UE is registered with the network may be a registration procedure for mobility and periodic registration update or a mobility and periodic registration procedure.

Note that the UE may or may not store each piece of S-NSSAI and/or S-NSSAI described in Section 2.6 at the time of initiating the present procedure. For example, the UE may or may not store the fourth rejected NSSAI, and/or the fourth rejected S-NSSAI, and/or the mapped S-NSSAI for the fourth rejected NSSAI, and/or the configured NSSAI, and/or the mapped S-NSSAI for the configured NSSAI, and/or the mapped S-NSSAI for the allowed NSSAI, and/or the mapped S-NSSAI for the pending NSSAI, and/or the like.

The details of the registration procedure described below are applicable to any of the pieces of NSSAI described above.

First, the UE initiates the registration procedure by transmitting, to the AMF, a NAS message including the Registration request message (S600) (S602) (S604). Specifically, the UE transmits, to the base station apparatus (also referred to as the 5G AN or the gNB), an RRC message including the registration request message (S600). Note that the registration request message is a NAS message transmitted and/or received over the N1 interface. In addition, the RRC message may be a control message transmitted and/or received between the UE and the base station apparatus. In addition, the NAS message is processed in the NAS layer, and the RRC message is processed in the RRC layer. Note that the NAS layer is a layer higher than the RRC layer.

Here, the UE can include the 1st identification information to the 4th identification information in the registration request message and/or the RRC message, and transmit them. Here, the 1st identification information to the 4th identification information may be as described in Section 2.6. Furthermore, the UE may include identification information indicating the type of the present procedure in the registration request message and/or the RRC message, and transmit them. Here, the identification information indicating the type of the present procedure may be a 5GS registration type Information Element (IE). The 5GS registration type IE is information indicating the type of the requested registration, and may indicate initial registration, updating of registration information in association with mobility (mobility registration updating), periodic updating of registration information (periodic registration updating), or emergency registration.

The UE may include these pieces of identification information in a control message different from the above, for example, a control message of a layer (for example, a Medium Access Control (MAC) layer, a Radio Link Control (RLC) layer, a Packet Data Convergence Protocol (PDCP) layer, a Service Data Adaptation Protocol (SDAP) layer, or the like) lower than the RRC layer, and transmit them. Note that, by transmitting these pieces of identification information, the UE may indicate that the UE supports the functions, or may indicate a request from the UE, or may indicate both.

Note that the UE may select or determine whether to transmit the 1st identification information to the 4th identification information to the network, based on the UE capability information, and/or the UE policy, and/or the UE state, and/or the user registration information, and/or a context stored in the UE, and/or the identification information transmitted and/or received in a procedure performed before the present procedure, and/or the like.

The UE may store the allowed NSSAI, the configured NSSAI, the rejected NSSAI, and the mapped S-NSSAI.

In a case of desiring to indicate whether the UE supports the function for the fourth rejected NSSAI, and/or the fourth rejected S-NSSAI, and/or the mapped S-NSSAI for the fourth rejected NSSAI, the UE may transmit at least one piece of identification information out of the 1st identification information to the 4th identification information.

The UE may also include, in the registration request message and/or the RRC message, information other than the 1st identification information to the 4th identification information. For example, the LTE ID and/or the PLMN ID and/or the AMF identification information may be included and transmitted. Here, the AMF identification information may be information for identifying an AMF or a set of AMFs, and may be, for example, a 5G S-Temporary Mobile Subscription Identifier (5G-S-TMSI) or a Globally Unique AMF Identifier (GUAMI).

In a case that the 5GS registration type indicates mobility registration updating, that the purpose of initiating the registration procedure is not to change the network slice with which the UE is currently registered, and that the UE is in the current registration area or the current tracking area, the UE need not include the requested NSSAI in the registration procedure.

In a case of transmitting the registration request message including the requested NSSAI, the UE may select the S-NSSAI included in the requested NSSAI from among the stored pieces of S-NSSAI other than the S-NSSAI included in the fourth rejected NSSAI (the fourth rejected S-NSSAI) and/or the S-NSSAI included in the mapped S-NSSAI for the fourth rejected NSSAI.

In addition, in a case of storing the fourth rejected NSSAI, and/or the fourth rejected S-NSSAI, and/or the mapped S-NSSAI for the fourth rejected NSSAI, the UE may be forbidden from transmitting, in the current tracking area in the current registration area, the registration request message and/or the RRC message including the S-NSSAI included in the fourth rejected NSSAI, and/or the fourth rejected S-NSSAI, and/or the mapped S-NSSAI for the fourth rejected NSSAI.

In a case of receiving the RRC message including the registration request message, the base station apparatus selects the AMF to which the registration request message is to be transferred (S602). Note that the base station apparatus may select the AMF, based on the identification information included in the registration request message and/or the RRC message. Specifically, in a case of receiving the 1st identification information to the 4th identification information, the base station apparatus may select the AMF corresponding to the transmission destination of the registration request message, based on the 1st identification information to the 4th identification information. Specifically, the base station apparatus may select an AMF included in the network slice identified by the 1st identification information to the 4th identification information, or an AMF having connectivity to the network slice identified by the 1st identification information to the 4th identification information.

Note that the method of selecting the AMF is not limited to the methods described above, and the base station apparatus may select the AMF based on other conditions.

The base station apparatus extracts the registration request message from the received RRC message and transfers the registration request message to the selected AMF (S604). Note that, in a case that the 1st identification information to the 4th identification information are not included in the registration request message but in the RRC message, the base station apparatus may transfer the identification information included in the RRC message to the selected AMF together with the registration request message (S604).

The AMF may perform a first condition fulfillment determination in a case where the AMF has received a registration request message. The first condition fulfillment determination is a decision as to whether the network is to accept the request of the UE. In a case that the first condition fulfillment determination is true, the AMF performs procedures from S610 to S612. In a case that the first condition fulfillment determination is false, the AMF may perform the procedure in S610.

A network function (also referred to as an NF) other than the AMF may perform the first condition fulfillment determination. In a case that an NF other than the AMF performs the first condition fulfillment determination, the AMF may provide the NF with information necessary for performing the first condition fulfillment determination, specifically, at least a part of the information received from the UE (S606). Then, in a case that the NF determines true or false of the first condition fulfillment determination based on the information received from the AMF, the NF may notify the AMF of information including results (in other words, true or false) of the first condition fulfillment determination. The AMF may determine the identification information and/or the control message to be transmitted to the UE, based on the results of the first condition fulfillment determination received from the NF.

Note that, in a case that the first condition fulfillment determination is true, the control message transmitted and/or received in S610 may be a Registration accept message, and in a case that the first condition fulfillment determination is false, the control message transmitted and/or received in S610 may be a Registration accept message or Registration reject message.

Note that the first condition fulfillment determination may be performed based on reception of the registration request message, and/or each piece of identification information included in the registration request message, and/or subscriber information, and/or capability information of the network, and/or the operator policy, and/or the state of the network, and/or registration information of the user, and/or the context stored in the AMF, and/or the like.

For example, in a case that the network allows or does not reject the request of the UE, the first condition fulfillment determination may be true, whereas in a case that the network does not allow or rejects the request of the UE, the first condition fulfillment determination may be false. In a case that the network allows or does not reject a part of the request from the UE, the first condition fulfillment determination may be true even in a case that the network does not allow a certain part of the request from the UE. In a case that the network allows none of the request from the UE or rejects all of the request from the UE, the first condition fulfillment determination may be false. In a case that a network with which the UE is to be registered and/or an apparatus in the network supports the function requested by the UE, the first condition fulfillment determination may be true, whereas in a case that the network and/or the apparatus does not support the function requested by the UE, the first condition fulfillment determination may be false. Further, in a case that the transmitted and/or received identification information is allowed, the first condition fulfillment determination may be true, whereas in a case that the transmitted and/or received identification information is not allowed, the first condition fulfillment determination may be false.

In a case that any piece of S-NSSAI is unavailable in the current tracking area among one or more pieces of S-NSSAI included in the requested NSSAI received from the UE, or that any current tracking area S-NSSAI is in the current registration area, or that any piece of S-NSSAI is unavailable in the current tracking area in the current registration area and is available in another tracking area in the current registration area, the first condition fulfillment determination may be false. Note that, even in such a case, the first condition fulfillment determination may be true.

In a case that no network slice (NS) is available, or that the tracking area is not allowed, or that the tracking area is not available, the first condition fulfillment determination may be false. Note that, even in such a case, the first condition fulfillment determination may be true.

The AMF may include one or more pieces of identification information out of the 11th identification information to the 14th identification information in the control message, and transmit them. Here, the 11th identification information to the 14th identification information may be as described in Section 2.6. Note that, by transmitting these pieces of identification information and/or the control message, the AMF may indicate that the network supports the functions, may indicate that the request from the UE is accepted, may indicate that the request from the UE is not allowed, or may indicate information obtained by combining the above-described pieces of information. Furthermore, in a case that multiple pieces of identification information are transmitted and/or received, two or more pieces of identification information of these pieces of identification information may be configured as one or multiple pieces of identification information. Note that information indicating support of each function and information indicating a request for use of each function may be transmitted and/or received as the same piece of identification information, or may be transmitted and/or received as different pieces of identification information.

In a case of receiving, from the UE, the registration request message including the 1st identification information to the 4th identification information, the AMF may include at least one piece of identification information out of the 11th identification information to the 14th identification information in the control message, and transmit them.

Even in a case of receiving, from the UE, the registration request message not including the 1st identification information to the 4th identification information, the AMF may include at least one piece of identification information out of the 11th identification information to the 14th identification information in the control message, and transmit them.

The AMF may further include the configured NSSAI, and/or the allowed NSSAI, and/or the rejected NSSAI, and/or the pending NSSAI in the control message, and transmit them. Note that the 11th identification information to the 14th identification information may be transmitted in the allowed NSSAI, and/or the rejected NSSAI, and/or the pending NSSAI, or may be transmitted as information different from the NSSAI described above.

In a case that the AMF is scheduled to perform the NSSAA procedure after completion of the present procedure or in parallel with the present procedure although there is no S-NSSAI (allowed NSSAI) allowed for the UE at the time of transmission of the control message, or the AMF is in the middle of performing the NSSAA procedure between the UE and the network, or the AMF includes the pending NSSAI in the control message and transmits them, the AMF may include an empty value in the allowed NSSAI and transmit them.

Note that the AMF may determine which piece of identification information the 11th identification information to the 14th identification information is to be included or not to be included in the control message, based on each piece of received identification information, and/or subscriber information, and/or capability information of the network, and/or the operator policy, and/or the state of the network, and/or registration information of the user, and/or the context stored in the AMF, and/or identification information transmitted and/or received in a procedure performed before the present procedure, and/or the like.

Based on each piece of the received identification information, and/or subscriber information, and/or capability information of the network, and/or the operator policy, and/or the state of the network, and/or registration information of the user, and/or the context stored in the AMF, and/or the like, the AMF may indicate that the request from the UE has been accepted by transmitting a registration accept message, or may indicate that the request from the UE has been rejected by transmitting a registration reject message.

In a case that the AMF receives, from the UE, the registration request message including at least a part of the 1st identification information to 4th identification information, and that, among the one or more pieces of S-NSSAI included in the 1st identification information, any piece of S-NSSAI is unavailable in the current tracking area, or there is current tracking area S-NSSAI in the current registration area, or any piece of S-NSSAI is unavailable in the current tracking area in the current registration area and is available in another tracking area in the current registration area, or no network slice (NS) is available, or the tracking area is not allowed, or the tracking area is not available, the AMF may include at least one piece of identification information out of the 11th identification information to the 14th identification information in the control message, and transmit them.

In a case that the UE transmits the registration request message including the capability information indicating that the NSSAA is not supported and the requested NSSAI, and that the S-NSSAI included in the requested NSSAI is S-NSSAI associated with the NSSAA, the AMF may include at least one piece of identification information out of the 11th identification information to the 14th identification information in the control message, and transmit them. Here, the S-NSSAI may be included in the 11th identification information, or the 13th identification information, or the 14th identification information.

The UE receives, via the base station apparatus, the control message (registration accept message or registration reject message) and/or the transmitted 11th identification information to 14th identification information (S610). In a case that the control message is a registration accept message, then by receiving the registration accept message, the UE can recognize that the request from the UE on the registration request message has been accepted, and recognize the contents of the various pieces of identification information included in the registration accept message. In addition, in a case that the control message is the registration reject message, the UE can recognize that the request from the UE using the registration request message has been rejected and the contents of various kinds of identification information included in the registration reject message, by receiving the registration reject message.

Further, in a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, the UE may store, in the rejected NSSAI for the current tracking area in the storage unit of the UE, the S-NSSAI included in the rejected NSSAI. In a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, then, based on the cause value indicated by the 12th identification information, the UE may store, in the rejected NSSAI for the current tracking area in the storage unit of the UE, the S-NSSAI included in the rejected NSSAI. Then, during when the S-NSSAI is stored in the rejected NSSAI for the current tracking area in the storage unit of the UE, the use of the S-NSSAI may be forbidden in the current tracking area.

In a case that, in the rejected NSSAI for the current tracking area in the storage unit of the UE, S-NSSAI is stored that is not available in the current tracking area in the current registration area and that is available in another tracking area in the current registration area, the UE may include S-NSSAI other than the above-described S-NSSAI in the requested NSSAI, and transmit the registration request message including the requested NSSAI.

In a case that, in the rejected NSSAI for the current tracking area in the storage unit of the UE, S-NSSAI is stored that is not available in the current tracking area in the current registration area and that is available in another tracking area in the current registration area, and the UE receives the 11th identification information indicating new allowed NSSAI for the current PLMN or SNPN, the S-NSSAI included in the new allowed NSSAI may be deleted from the rejected NSSAI for the current tracking area in the storage unit of the UE.

In a case that the UE receives the 11th identification information and/or the 13th identification information, and the 11th identification information and/or the 13th identification information is the allowed NSSAI, the UE may recognize that the use of the S-NSSAI included in the allowed NSSAI is allowed, and/or the registration with the network is allowed, and/or the request from the UE is allowed.

In a case of receiving at least a part of the 11th identification information to the 14th identification information (for example, in a case of receiving the 11th identification information and the 12th identification information), the UE may recognize that the 12th identification information is information corresponding to the 11th identification information. In other words, the UE may recognize that the fourth rejected NSSAI, and/or the fourth rejected S-NSSAI, and/or the mapped S-NSSAI to the fourth rejected NSSAI, indicated by the 11th identification information, is not available in the current tracking area, and/or is not available in the current tracking area in the current registration area, and/or is not available in the current tracking area in the current registration area but is available in another tracking area in the current registration area, and/or no network slice NS is available, and/or the tracking area is not allowed, and/or the tracking area is not available.

In a case that the UE receives at least a part of the 11th identification information to the 14th identification information (for example, the UE receives the 11th identification information and the 13th identification information), and the 11th identification information and/or the 13th identification information is the first rejected NSSAI, and/or the first rejected S-NSSAI, and/or the mapped S-NSSAI for the first rejected NSSAI, the UE may recognize that the use of the first rejected NSSAI is forbidden in the current PLMN or SNPN.

In a case that the UE receives at least a part of the 11th identification information to the 14th identification information (for example, the UE receives the 11th identification information and the 13th identification information), and the 11th identification information and/or the 13th identification information is the second rejected NSSAI, and/or the second rejected S-NSSAI, and/or the mapped S-NSSAI for the second rejected NSSAI, the UE may recognize that, for access involving reception of the 11th identification information and/or the 13th identification information, the use of the second rejected NSSAI, and/or the second rejected S-NSSAI, and/or the mapped S-NSSAI for the second rejected NSSAI is forbidden in the current registration area.

In a case that the UE receives at least a part of the 11th identification information to the 14th identification information (for example, the UE receives the 11th identification information and the 13th identification information) and the 11th identification information and/or the 13th identification information is the third rejected NSSAI, and/or the third rejected S-NSSAI, the UE may recognize that the use of the third rejected NSSAI is forbidden because the NSSAA is failed or canceled.

In a case that the UE receives at least a part of the 11th identification information to the 14th identification information, the 11th identification information is the fourth rejected NSSAI, and/or the fourth rejected S-NSSAI, and/or the mapped S-NSSAI for the fourth rejected NSSAI, and the 13th identification information is the first rejected NSSAI to the third rejected NSSAI, and/or the first rejected S-NSSAI to the third rejected S-NSSAI, and/or the mapped S-NSSAI for the first rejected NSSAI to the third rejected NSSAI, the UE may separately manage and/or store the fourth rejected NSSAI, and/or the fourth rejected S-NSSAI, and/or the mapped S-NSSAI for the fourth rejected NSSAI, and the first rejected NSSAI to the third rejected NSSAI, and/or the first rejected S-NSSAI to the third rejected S-NSSAI, and/or the mapped S-NSSAI for the first rejected NSSAI to the third rejected NSSAI.

In addition, in a case that the UE may store the fourth rejected NSSAI, and/or the fourth rejected S-NSSAI, and/or the mapped S-NSSAI for the fourth rejected NSSAI, the UE may manage and/or store the 11th identification information only for the access on which the UE received the 11th identification information.

In addition, in a case of being provided with new configured NSSAI for the current PLMN or SNPN, the UE may replace the stored configured NSSAI with the new configured NSSAI. In this case, the UE may further delete the mapped S-NSSAI for the stored configured NSSAI and store the mapped S-NSSAI for the new configured NSSAI, may further delete the stored fourth rejected NSSAI, or may further delete the S-NSSAI included in the mapped S-NSSAI for the new configured NSSAI for the current PLMN or SNPN, from the mapped S-NSSAI for the stored fourth rejected NSSAI.

In addition, in a case of receiving new allowed NSSAI for the current PLMN or SNPN, the UE may delete, from the stored fourth rejected NSSAI, the S-NSSAI included in the new allowed NSSAI. In this case, the UE may further delete, from the mapped S-NSSAI for the stored fourth rejected NSSAI, the S-NSSAI included in the mapped S-NSSAI for the new allowed NSSAI for the current PLMN or SNPN.

Further, in a case that the UE receives the S-NSSAI (the fourth rejected S-NSSAI) included in the rejected NSSAI (the fourth rejected NSSAI) included in the control message, then based on the rejection cause, the UE may store the received fourth rejected S-NSSAI in the rejected NSSAI and the mapped S-NSSAI for the rejected NSSAI or in the fourth rejected NSSAI and the mapped S-NSSAI for the fourth rejected NSSAI, in the UE.

Further, in a case that the UE receives the S-NSSAI (fourth rejected S-NSSAI) included in the rejected NSSAI (fourth rejected NSSAI) included in the control message, and the S-NSSAI is included in the rejected NSSAI IE (also referred to as the rejected NSSAI), the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the control message and the S-NSSAI is included in the Extended rejected NSSAI IE (also referred to as Extended rejected NSSAI), the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the control message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the control message, the UE may delete the S-NSSAI included in the mapped S-NSSAI for the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the control message, the UE may delete the S-NSSAI included in the mapped S-NSSAI for the fourth rejected NSSAI associated with the same access type, from the mapped S-NSSAI for the allowed NSSAI stored in the UE.

Further, in a case that the UE receives the S-NSSAI (fourth rejected S-NSSAI) included in the rejected NSSAI (fourth rejected NSSAI) included in the control message, and the S-NSSAI is included in the Rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the control message, and the S-NSSAI is included in the Extended rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the control message, and the S-NSSAI is included in the Extended rejected NSSAI IE, the UE may delete the S-NSSAI included in the mapped S-NSSAI for the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during roaming, the S-NSSAI (fourth rejected S-NSSAI) included in the rejected NSSAI (fourth rejected NSSAI) included in the control message, and the S-NSSAI is included in the Extended rejected NSSAI IE, the UE may delete the S-NSSAI included in the mapped S-NSSAI for the fourth rejected NSSAI associated with the same access type, from the mapped S-NSSAI for the pending NSSAI stored in the UE.

In a case of moving from the tracking area in which the fourth rejected NSSAI or the fourth rejected S-NSSAI has been received to another tracking area, the UE may delete the fourth rejected NSSAI and/or the access type of the fourth rejected NSSAI stored in the UE.

In a case of transitioning from the 5GMM-DEREGISTERED state to the 5GMM-REGISTERED state, the UE may delete the fourth rejected NSSAI and/or the access type of the fourth rejected NSSAI stored in the UE.

In a case of receiving the fourth rejected NSSAI included in the control message, the UE may perform an operation based on the rejection cause included in the rejected S-NSSAI (fourth rejected S-NSSAI) included in the fourth rejected NSSAI. For example, the UE may be forbidden from using the fourth S-NSSAI in the current tracking area. In other words, the UE may be in a state of being forbidden from the MM procedure and/or the SM procedure using the fourth S-NSSAI in the current tracking area.

In a case of receiving the first rejected NSSAI, the UE may store the received first rejected NSSAI in the first rejected NSSAI in the storage unit of the UE. In a case of receiving the second rejected NSSAI, the UE may store the received second rejected NSSAI in the second rejected NSSAI in the storage unit of the UE. In a case of receiving the third rejected NSSAI, the UE may store the received third rejected NSSAI in the third rejected NSSAI in the storage unit of the UE. In a case of receiving the fourth rejected NSSAI, and/or the fourth rejected S-NSSAI, and/or the mapped S-NSSAI for the fourth rejected NSSAI, the UE may store the received fourth rejected NSSAI and/or fourth rejected S-NSSAI and/or mapped S-NSSAI for the fourth rejected NSSAI in the fourth rejected NSSAI and/or fourth rejected S-NSSAI and/or mapped S-NSSAI for the fourth rejected NSSAI in the storage unit of the UE. In other words, the UE may separately manage and/or store the first rejected NSSAI, and/or the second rejected NSSAI, and/or the third rejected NSSAI, and/or the fourth rejected NSSAI.

In a case of receiving the fourth rejected NSSAI, and/or the fourth rejected S-NSSAI, and/or the mapped S-NSSAI for the fourth rejected NSSAI, the UE may store the fourth rejected NSSAI, and/or the fourth rejected S-NSSAI, and/or the mapped S-NSSAI for the fourth rejected NSSAI in the first rejected NSSAI and/or second rejected NSSAI and/or third rejected NSSAI in the storage unit of the UE, and manage and/or store the received fourth rejected NSSAI and/or fourth rejected S-NSSAI and/or mapped S-NSSAI for the fourth rejected NSSAI, together with information indicating that the received fourth rejected NSSAI and/or fourth rejected S-NSSAI and/or mapped S-NSSAI for the fourth rejected NSSAI is not available in the current tracking area, or in the current tracking area in the current registration area, or in the current tracking area in the current registration area, but is available in another tracking area in the current registration area.

The UE may determine in which of the first rejected NSSAI and/or second rejected NSSAI and/or third rejected NSSAI and/or fourth rejected NSSAI and/or fourth rejected S-NSSAI and/or mapped S-NSSAI for the fourth rejected NSSAI in the storage unit of the UE the received fourth rejected NSSAI and/or fourth rejected S-NSSAI and/or mapped S-NSSAI for the fourth rejected NSSAI is stored, based on the received 12th identification information.

Further, in a case that the control message is a registration accept message, the UE can transmit a registration complete message to the AMF via the base station apparatus, as a response message to the registration accept message (S612). Here, although the registration complete message is a NAS message transmitted and/or received over the N1 interface, the registration complete message may be included in the RRC message in a case of being transmitted and/or received between the UE and the base station apparatus.

The AMF receives the registration complete message via the base station apparatus (S612). In addition, each apparatus completes the present procedure based on transmission and/or reception of the registration accept message and/or the registration complete message.

Each apparatus may complete the registration procedure based on the transmission and/or reception of the registration reject message.

Note that each apparatus may transition to or maintain a state in which the UE is registered with the network (an RM REGISTERED state or a 5GMM-REGISTERED state), based on the transmission and/or reception of the registration accept message and/or the registration complete message, or may transition to or maintain a state in which the UE is not registered with the network (an RM DEREGISTERED state or a 5GMM-DEREGISTERED state) over the access in which the UE has received the registration reject message for the current PLMN, based on the transmission and/or reception of the registration reject message. Also, the transition of each apparatus to each state may be performed based on reception of the registration complete message or completion of the registration procedure.

Furthermore, each apparatus may perform processing based on information transmitted and/or received in the registration procedure, based on completion of the registration procedure. For example, in a case that information indicating that a part of the request from the UE has been rejected is transmitted and/or received, the reason for rejection of the request from the UE may be recognized. Furthermore, each apparatus may perform the present procedure again or may perform the registration procedure on the core network_A or another cell based on the reason for the rejection of the request from the UE.

Moreover, the UE may store the identification information received along with the registration accept message and/or the registration reject message or may recognize determination of the network based on the completion of the registration procedure.

Each apparatus may store the pieces of information transmitted and/or received in the present procedure in association with one another.

### 3.2. Configuration Update Procedure

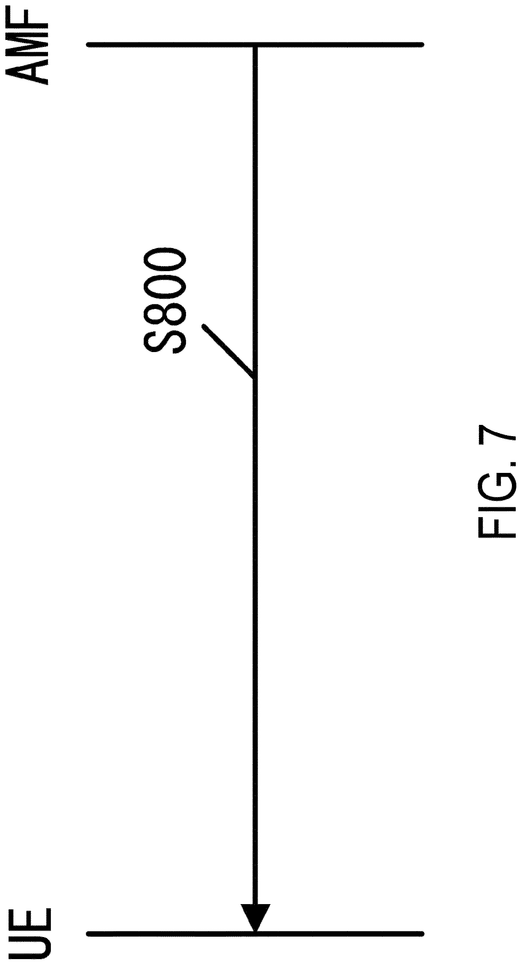

Next, the configuration update procedure (also referred to as the generic UE configuration update procedure) will be described with reference to FIG. 7. In the procedure in Section 3.1, in a case that the UE is in a state of being registered with the network as a result of transmission and/or reception of the registration accept message and/or the NAS message between the apparatuses including the UE, and the AMF desires to change the configuration of the UE, the present procedure (configuration update procedure) may be initiated. Note that the present procedure may be performed via the same access as that involving performance of the procedure of Section 3.1. The UE may initiate the present procedure after performing the procedures in Sections 3.1 and 3.2 one or more times. The AMF may initiate the present procedure in a case that there is a change in the state of the NSSAI, and/or S-NSSAI, and/or mapped S-NSSAI, and/or the like already notified to the UE.

The present procedure may be performed in the PLMN (HPLMN or VPLMN), or the equivalent PLMN, or the SNPN, or the equivalent SNPN.

Note that the UE may or may not store each piece of S-NSSAI and/or S-NSSAI described in Section 2.6 at the time of initiating the present procedure. For example, the UE may or may not store the fourth rejected NSSAI, and/or the fourth rejected S-NSSAI, and/or the mapped S-NSSAI for the fourth rejected NSSAI, and/or the configured NSSAI, and/or the mapped S-NSSAI for the configured NSSAI, and/or the mapped S-NSSAI for the allowed NSSAI, and/or the mapped S-NSSAI for the pending NSSAI, and/or the like.

The present procedure is initiated by the AMF transmitting a configuration update command (Configuration update commmand) to the UE via the access network (S800 of FIG. 7). Note that the configuration update command may include at least one piece of identification information out of the 11th identification information to the 14th identification information.

Note that the AMF may determine which piece of identification information among the 11th identification information to the 14th identification information is to be included or not to be included in the configuration update command, based on each piece of received identification information, and/or subscriber information, and/or capability information of the network, and/or the operator policy, and/or the state of the network, and/or registration information of the user, and/or the context stored in the AMF, and/or identification information transmitted and/or received in a procedure performed before the present procedure, and/or the like.

For example, the AMF may include, in the configuration update command, at least one piece of identification information out of the 11th identification information to the 14th identification information in a case that there is a change in the state of the NSSAI and/or S-NSSAI and/or mapped S-NSSAI and/or the like already notified to the UE.

The AMF can cause the configuration of the UE to be updated by transmitting, to the UE via the access network, a configuration update command including at least a part of the 11th identification information to the 14th identification information.

The UE can update the configuration of the UE by receiving, from the AMF, the configuration update command including at least a part of the 11th identification information to the 14th identification information.

In a case of receiving the configuration update command from the AMF, the UE can recognize the content of each piece of identification information included in the configuration update command. The UE may then determine the behavior of the UE, based on the reception of the configuration update command and/or each piece of identification information.

Further, in a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, the UE may store, in the rejected NSSAI for the current tracking area in the storage unit of the UE, the S-NSSAI included in the rejected NSSAI. In a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, then, based on the cause value indicated by the 12th identification information, the UE may store, in the rejected NSSAI for the current tracking area in the storage unit of the UE, the S-NSSAI included in the rejected NSSAI. Then, during when the S-NSSAI is stored in the rejected NSSAI for the current tracking area in the storage unit of the UE, the use of the S-NSSAI may be forbidden in the current tracking area.

In a case that, in the rejected NSSAI for the current tracking area in the storage unit of the UE, S-NSSAI is stored that is not available in the current tracking area in the current registration area and that is available in another tracking area in the current registration area, the UE may include S-NSSAI other than the above-described S-NSSAI in the requested NSSAI, and transmit the registration request message including the requested NSSAI.

In a case that, in the rejected NSSAI for the current tracking area in the storage unit of the UE, S-NSSAI is stored that is not available in the current tracking area in the current registration area and that is available in another tracking area in the current registration area, and the UE receives new allowed NSSAI for the current PLMN or SNPN, the S-NSSAI included in the new allowed NSSAI may be deleted from the rejected NSSAI for the current tracking area in the storage unit of the UE.

In addition, in a case of being provided with new configured NSSAI for the current PLMN or SNPN, the UE may replace the stored configured NSSAI with the new configured NSSAI. In this case, the UE may further delete the mapped S-NSSAI for the stored configured NSSAI and store the mapped S-NSSAI for the new configured NSSAI, may further delete the stored fourth rejected NSSAI, or may further delete the S-NSSAI included in the mapped S-NSSAI for the new configured NSSAI for the current PLMN or SNPN, from the mapped S-NSSAI for the stored fourth rejected NSSAI.

In addition, in a case of receiving new allowed NSSAI for the current PLMN or SNPN, the UE may delete, from the stored fourth rejected NSSAI, the S-NSSAI included in the new allowed NSSAI. In this case, the UE may further delete, from the mapped S-NSSAI for the stored fourth rejected NSSAI, the S-NSSAI included in the mapped S-NSSAI for the new allowed NSSAI for the current PLMN or SNPN.

In addition, in a case of receiving the S-NSSAI (the fourth rejected S-NSSAI) included in the rejected NSSAI (the fourth rejected NSSAI) included in the configuration update command message, the UE may store, based on the rejection cause, the received fourth rejected S-NSSAI in the rejected NSSAI and the mapped S-NSSAI for the rejected NSSAI or in the fourth rejected NSSAI and the mapped S-NSSAI for the fourth rejected NSSAI, in the UE.

Further, in a case that the UE receives the S-NSSAI (fourth rejected S-NSSAI) included in the rejected NSSAI (fourth rejected NSSAI) included in the configuration update command message, and the S-NSSAI is included in the Rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the configuration update command message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the configuration update command message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the configuration update command message, the UE may delete the S-NSSAI included in the mapped S-NSSAI for the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the configuration update command message, the UE may delete the S-NSSAI included in the mapped S-NSSAI for the fourth rejected NSSAI associated with the same access type, from the mapped S-NSSAI for the allowed NSSAI stored in the UE.

Further, in a case that the UE receives the S-NSSAI (fourth rejected S-NSSAI) included in the rejected NSSAI (fourth rejected NSSAI) included in the configuration update command message, and the S-NSSAI is included in the Rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the configuration update command message, and the S-NSSAI is included in the Extended rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the configuration update command message, and the S-NSSAI is included in the Extended rejected NSSAI IE, the UE may delete the S-NSSAI included in the mapped S-NSSAI for the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during roaming, the S-NSSAI (fourth rejected S-NSSAI) included in the rejected NSSAI (fourth rejected NSSAI) included in the configuration update command message, and the S-NSSAI is included in the Extended rejected NSSAI IE, the UE may delete the S-NSSAI included in the mapped S-NSSAI for the fourth rejected NSSAI associated with the same access type, from the mapped S-NSSAI for the pending NSSAI stored in the UE.

In a case of moving from the tracking area in which the fourth rejected NSSAI or the fourth rejected S-NSSAI has been received to another tracking area, the UE may delete the fourth rejected NSSAI and/or the access type of the fourth rejected NSSAI stored in the UE.

In a case of receiving the fourth rejected NSSAI included in the configuration update command message, the UE may perform an operation based on the rejection cause included in the rejected S-NSSAI (fourth rejected S-NSSAI) included in the fourth rejected NSSAI. For example, the UE may be forbidden from using the fourth S-NSSAI in the current tracking area. In other words, the UE may be in a state of being forbidden from the MM procedure and/or the SM procedure using the fourth S-NSSAI in the current tracking area.

In a case of receiving the first rejected NSSAI, the UE may store the received first rejected NSSAI in the first rejected NSSAI in the storage unit of the UE. In a case of receiving the second rejected NSSAI, the UE may store the received second rejected NSSAI in the second rejected NSSAI in the storage unit of the UE. In a case of receiving the third rejected NSSAI, the UE may store the received third rejected NSSAI in the third rejected NSSAI in the storage unit of the UE. In a case of receiving the fourth rejected NSSAI, and/or the fourth rejected S-NSSAI, and/or the mapped S-NSSAI for the fourth rejected NSSAI, the UE may store the received fourth rejected NSSAI and/or fourth rejected S-NSSAI and/or mapped S-NSSAI for the fourth rejected NSSAI in the fourth rejected NSSAI and/or fourth rejected S-NSSAI and/or mapped S-NSSAI for the fourth rejected NSSAI in the storage unit of the UE. In other words, the UE may separately manage and/or store the first rejected NSSAI, and/or the second rejected NSSAI, and/or the third rejected NSSAI, and/or the fourth rejected NSSAI.

In a case of receiving the fourth rejected NSSAI, and/or the fourth rejected S-NSSAI, and/or the mapped S-NSSAI for the fourth rejected NSSAI, the UE may store the fourth rejected NSSAI, and/or the fourth rejected S-NSSAI, and/or the mapped S-NSSAI for the fourth rejected NSSAI in the first rejected NSSAI and/or second rejected NSSAI and/or third rejected NSSAI in the storage unit of the UE, and manage and/or store the received fourth rejected NSSAI and/or fourth rejected S-NSSAI and/or mapped S-NSSAI for the fourth rejected NSSAI, together with information indicating that the received fourth rejected NSSAI and/or fourth rejected S-NSSAI and/or mapped S-NSSAI for the fourth rejected NSSAI is not available in the current tracking area, or in the current tracking area in the current registration area, or in the current tracking area in the current registration area, but is available in another tracking area in the current registration area.

The UE may determine in which of the first rejected NSSAI and/or second rejected NSSAI and/or third rejected NSSAI and/or fourth rejected NSSAI and/or fourth rejected S-NSSAI and/or mapped S-NSSAI for the fourth rejected NSSAI in the storage unit of the UE the received fourth rejected NSSAI and/or fourth rejected S-NSSAI and/or mapped S-NSSAI for the fourth rejected NSSAI is stored, based on the received 12th identification information.

Each apparatus may store the pieces of information transmitted and/or received in the present procedure in association with one another.

The UE may complete the present procedure by receiving the configuration update command from the AMF.

### 3.3. De-registration Procedure

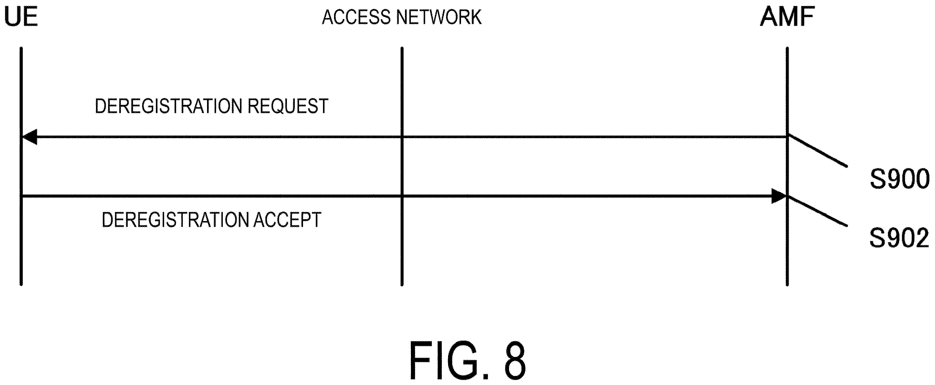

Next, a network initiated de-registration procedure will be described with reference to FIG. 8. Hereinafter, the network initiated de-registration procedure is also referred to as the present procedure. The de-registration procedure may be a procedure for de-registration of the UE having been registered with the network (the access network, and/or the core network, and/or the DN). In other words, the AMF may perform the de-registration procedure in a case that the UE is in a state of being registered with the network (RM-REGISTERED state or 5GMM-REGISTEDED state). The present procedure may be initiated after the procedures in Sections 3.1 and 3.2 are performed one or more times. Here, a case will be described in which the de-registration procedure is performed via the same access as that involving performance of the procedure in Section 3.1 or Section 3.2. The AMF may initiate the present procedure in a case that there is a change in the state of the NSSAI, and/or S-NSSAI, and/or mapped S-NSSAI, and/or the like already notified to the UE.

The present procedure may be performed in the PLMN (HPLMN or VPLMN), or the equivalent PLMN, or the SNPN, or the equivalent SNPN.

Note that the UE may or may not store each piece of S-NSSAI and/or S-NSSAI described in Section 2.6 at the time of initiating the present procedure. For example, the UE may or may not store the fourth rejected NSSAI, and/or the fourth rejected S-NSSAI, and/or the mapped S-NSSAI for the fourth rejected NSSAI, and/or the configured NSSAI, and/or the mapped S-NSSAI for the configured NSSAI, and/or the mapped S-NSSAI for the allowed NSSAI, and/or the mapped S-NSSAI for the pending NSSAI, and/or the like.

The AMF initiates the present procedure by transmitting a de-registration request (DEREGISTRATION REQUEST) message to the UE via the access network (3GPP access or non-3GPP access) (S900). Here, the de-registration request message is a NAS message transmitted and/or received over the N1 interface, but is actually a message transmitted by the AMF to the UE via the base station apparatus included in the access network.

The AMF may include at least one piece of identification information out of the 11th identification information to the 14th identification information in the de-registration request message, and transmit them.

Note that the AMF may determine which piece of identification information among the 11th identification information to the 14th identification information is to be included or not to be included in the de-registration request message, based on each piece of received identification information, and/or subscriber information, and/or capability information of the network, and/or the operator policy, and/or the state of the network, and/or registration information of the user, and/or the context stored in the AMF, and/or identification information transmitted and/or received in a procedure performed before the present procedure, and/or the like.

For example, the AMF may include, in the de-registration request message, at least one piece of identification information out of the 11th identification information to the 14th identification information in a case that there is a change in the state of the NSSAI and/or S-NSSAI and/or mapped S-NSSAI and/or the like already notified to the UE.

In a case of receiving the de-registration request message from the AMF, the UE can recognize the content of each piece of identification information included in the de-registration request message. The UE may then determine the behavior of the UE, based on the reception of the de-registration request message and/or each piece of identification information.

In other words, the UE may transition the registered state of the UE to the deregistered state, or may release the PDU session established in the PLMN. These may be performed during performance of the present procedure or may be performed after completion of the present procedure.

Further, in a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, the UE may store, in the rejected NSSAI for the current tracking area in the storage unit of the UE, the S-NSSAI included in the rejected NSSAI. In a case that the UE receives, from the core network, at least a part of the 11th identification information to the 14th identification information (for example, in a case of receiving the 11th identification information and the 12th identification information), and the 11th identification information includes S-NSSAI that is not available in the current tracking area in the current registration area and that is available in another tracking area in the current registration area, then, based on the cause value indicated by the 12th identification information, the UE may store, in the rejected NSSAI for the current tracking area in the storage unit of the UE, the S-NSSAI included in the rejected NSSAI. Then, during when the S-NSSAI is stored in the rejected NSSAI for the current tracking area in the storage unit of the UE, the use of the S-NSSAI may be forbidden in the current tracking area.

In a case that, in the rejected NSSAI for the current tracking area in the storage unit of the UE, S-NSSAI is stored that is not available in the current tracking area in the current registration area and that is available in another tracking area in the current registration area, the UE may include S-NSSAI other than the above-described S-NSSAI in the requested NSSAI, and transmit the registration request message including the requested NSSAI.

In a case that, in the rejected NSSAI for the current tracking area in the storage unit of the UE, S-NSSAI is stored that is not available in the current tracking area in the current registration area and that is available in another tracking area in the current registration area, and the UE receives new allowed NSSAI for the current PLMN or SNPN, the S-NSSAI included in the new allowed NSSAI may be deleted from the rejected NSSAI for the current tracking area in the storage unit of the UE.

In addition, in a case of being provided with new configured NSSAI for the current PLMN or SNPN, the UE may replace the stored configured NSSAI with the new configured NSSAI. In this case, the UE may further delete the mapped S-NSSAI for the stored configured NSSAI and store the mapped S-NSSAI for the new configured NSSAI, may further delete the stored fourth rejected NSSAI, or may further delete the S-NSSAI included in the mapped S-NSSAI for the new configured NSSAI for the current PLMN or SNPN, from the mapped S-NSSAI for the stored fourth rejected NSSAI.

In addition, in a case of receiving new allowed NSSAI for the current PLMN or SNPN, the UE may delete, from the stored fourth rejected NSSAI, the S-NSSAI included in the new allowed NSSAI. In this case, the UE may further delete, from the mapped S-NSSAI for the stored fourth rejected NSSAI, the S-NSSAI included in the mapped S-NSSAI for the new allowed NSSAI for the current PLMN or SNPN.

In addition, in a case of receiving the S-NSSAI (fourth rejected S-NSSAI) included in the rejected NSSAI (fourth rejected NSSAI) included in the de-registration request message, the UE may store, based on the rejection cause, the received fourth rejected S-NSSAI in the rejected NSSAI and the mapped S-NSSAI for the rejected NSSAI or in the fourth rejected NSSAI and the mapped S-NSSAI for the fourth rejected NSSAI, in the UE.

Further, in a case that the UE receives the S-NSSAI (fourth rejected S-NSSAI) included in the rejected NSSAI (fourth rejected NSSAI) included in the de-registration request message, and the S-NSSAI is included in the Rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the de-registration request message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the de-registration request message, and the S-NSSAI is included in the Extended rejected NSSAI IE, the UE may delete the S-NSSAI (fourth rejected S-NSSAI) included in the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during non-roaming, the S-NSSAI (fourth rejected S-NSSAI) included in the rejected NSSAI (fourth rejected NSSAI) included in the de-registration request message, the UE may delete the S-NSSAI included in the mapped S-NSSAI for the fourth rejected NSSAI associated with the same access type, from the allowed NSSAI, stored in the UE, for the current PLMN or SNPN and the equivalent PLMN or equivalent SNPN of the current PLMN or SNPN.

Further, in a case that the UE receives, during roaming, the S-NSSAI (fourth rejected S-NSSAI) included in the rejected NSSAI (fourth rejected NSSAI) included in the de-registration request message, the UE may delete the S-NSSAI included in the mapped S-NSSAI for the fourth rejected NSSAI associated with the same access type, from the mapped S-NSSAI for the allowed NSSAI stored in the UE.

Further, in a case that the UE receives the S-NSSAI (fourth rejected S-NSSAI) included in the rejected NSSAI (fourth rejected NSSAI) included in the de-registration request message and the S-NSSAI is included in the Rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the de-registration request message, and the S-NSSAI is included in the Extended rejected NSSAI IE, the UE may delete the S-NSSAI (fourth rejected S-NSSAI) included in the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during non-roaming, the S-NSSAI (fourth rejected S-NSSAI) included in the rejected NSSAI (fourth rejected NSSAI) included in the de-registration request message, and the S-NSSAI is included in the Extended rejected NSSAI IE, the UE may delete the S-NSSAI included in the mapped S-NSSAI for the fourth rejected NSSAI associated with the same access type, from the pending NSSAI, stored in the UE, for the current PLMN or SNPN and the equivalent PLMN or SNPN of the current PLMN or SNPN.

Further, in a case that the UE receives, during roaming, the S-NSSAI (fourth rejected S-NSSAI) included in the rejected NSSAI (fourth rejected NSSAI) included in the de-registration request message, and the S-NSSAI is included in the Extended rejected NSSAI IE, the UE may delete the S-NSSAI included in the mapped S-NSSAI for the fourth rejected NSSAI associated with the same access type, from the mapped S-NSSAI for the pending NSSAI stored in the UE.

In addition, in a case of deregistering over an access which is the access over which the UE receives the fourth rejected NSSAI or the fourth rejected S-NSSAI, in other words, in a case of completing a de-registration procedure over the access, the UE may delete the fourth rejected NSSAI and/or the access type of the fourth rejected NSSAI stored in the UE.

In a case of moving from the tracking area in which the fourth rejected NSSAI or the fourth rejected S-NSSAI has been received to another tracking area, the UE may delete the fourth rejected NSSAI and/or the access type of the fourth rejected NSSAI stored in the UE.

In a case of transitioning from the 5GMM-REGISTERED state to the 5GMM-DEREGISTERED state, the UE may delete the fourth rejected NSSAI and/or the access type of the fourth rejected NSSAI stored in the UE.

In a case of receiving the fourth rejected NSSAI included in the de-registration request message, the UE may perform an operation based on the rejection cause included in the rejected S-NSSAI (fourth rejected S-NSSAI) included in the fourth rejected NSSAI. For example, the UE may be forbidden from using the fourth S-NSSAI in the current tracking area. In other words, the UE may be in a state of being forbidden from the MM procedure and/or the SM procedure using the fourth S-NSSAI in the current tracking area.

In a case of receiving the first rejected NSSAI, the UE may store the received first rejected NSSAI in the first rejected NSSAI in the storage unit of the UE. In a case of receiving the second rejected NSSAI, the UE may store the received second rejected NSSAI in the second rejected NSSAI in the storage unit of the UE. In a case of receiving the third rejected NSSAI, the UE may store the received third rejected NSSAI in the third rejected NSSAI in the storage unit of the UE. In a case of receiving the fourth rejected NSSAI, and/or the fourth rejected S-NSSAI, and/or the mapped S-NSSAI for the fourth rejected NSSAI, the UE may store the received fourth rejected NSSAI and/or fourth rejected S-NSSAI and/or mapped S-NSSAI for the fourth rejected NSSAI in the fourth rejected NSSAI and/or fourth rejected S-NSSAI and/or mapped S-NSSAI for the fourth rejected NSSAI in the storage unit of the UE. In other words, the UE may separately manage and/or store the first rejected NSSAI, and/or the second rejected NSSAI, and/or the third rejected NSSAI, and/or the fourth rejected NSSAI.

In a case of receiving the fourth rejected NSSAI, and/or the fourth rejected S-NSSAI, and/or the mapped S-NSSAI for the fourth rejected NSSAI, the UE may store the fourth rejected NSSAI, and/or the fourth rejected S-NSSAI, and/or the mapped S-NSSAI for the fourth rejected NSSAI in the first rejected NSSAI and/or second rejected NSSAI and/or third rejected NSSAI in the storage unit of the UE, and manage and/or store the received fourth rejected NSSAI and/or fourth rejected S-NSSAI and/or mapped S-NSSAI for the fourth rejected NSSAI, together with information indicating that the received fourth rejected NSSAI and/or fourth rejected S-NSSAI and/or mapped S-NSSAI for the fourth rejected NSSAI is not available in the current tracking area, or in the current tracking area in the current registration area, or in the current tracking area in the current registration area, but is available in another tracking area in the current registration area.

The UE may determine in which of the first rejected NSSAI and/or second rejected NSSAI and/or third rejected NSSAI and/or fourth rejected NSSAI and/or fourth rejected S-NSSAI and/or mapped S-NSSAI for the fourth rejected NSSAI in the storage unit of the UE the received fourth rejected NSSAI and/or fourth rejected S-NSSAI and/or mapped S-NSSAI for the fourth rejected NSSAI is stored, based on the received 12th identification information.

In a case of receiving the de-registration request message, the UE may transmit the de-registration accept (DEREGISTRATION ACCEPT) message to the AMF (S902). Here, the de-registration accept message is a NAS message transmitted and/or received over the N1 interface, but is actually a message transmitted by the UE to the AMF via the access network.

Each apparatus may transition to a state in which the UE is not registered with the network (RM DEREGISTERED state or 5GMM-DEREGISTERED state), based on the transmission and/or reception of the de-registration accept message. In other words, each apparatus may transition to a state in which the UE is not registered with the network for the access involving transmission and/or reception of the de-registration accept message.

Each apparatus may complete the present procedure, based on the transmission and/or the reception of the de-registration accept message.

Note that the state transition in each apparatus may be performed based on completion of the present procedure. In other words, each apparatus may transition to the state where the UE is not registered with the network, based on completion of the de-registration procedure. In other words, each apparatus may transition to the state in which the UE is not registered with the network for the access involving performance of the de-registration procedure.

Each apparatus may store the pieces of information transmitted and/or received in the present procedure in association with one another.

The UE in the deregistered state may perform the procedure in Section 3.1 for access that is the same as or different from that involving performance of the de-registration procedure or transmission and/or reception of the de-registration accept message.

### 4. Modifications

A program running on an apparatus according to an aspect of the present invention may serve as a program that controls a Central Processing Unit (CPU) and the like to cause a computer to function in such a manner as to realize the functions of the aforementioned embodiments according to the present invention. Programs or information handled by the programs are temporarily stored in a volatile memory such as a Random Access Memory (RAM), a non-volatile memory such as a flash memory, a Hard Disk Drive (HDD), or another storage apparatus system.

Note that a program for realizing such functions of the embodiment according to an aspect of the present invention may be recorded on a computer-readable recording medium. The functions may be realized by causing a computer system to read the program recorded on the recording medium for execution. It is assumed that the "computer system" refers to a computer system built into the apparatuses, and the computer system includes an operating system and hardware components such as a peripheral device. In addition, the "computer-readable recording medium" may be a semiconductor recording medium, an optical recording medium, a magnetic recording medium, a medium dynamically retaining the program for a short time, or any other computer-readable recording medium.

In addition, each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The aforementioned electric circuit may include a digital circuit or may include an analog circuit. In addition, in a case that a circuit integration technology that replaces the present integrated circuits appears with advances in semiconductor technologies, one or multiple aspects of the present invention can also use a new integrated circuit based on the technology.

Note that the invention of the present application is not limited to the above-described embodiments. In the embodiment, apparatuses have been described as an example, but an aspect of the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

Although, the embodiments of the present invention have been described in detail above referring to the drawings, the specific configuration is not limited to the embodiments and includes, for example, design changes within the scope that does not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Cross-Reference of Related Application

This application claims the benefit of priority to Japanese Patent Application No. 2021-203947 filed on December 16, 2021, the content of which is incorporated herein by reference in its entirety.

### Reference Signs List

1 Mobile communication system
10 UE_A
30 PGW-U
32 PGW-C
35 SGW
40 MME
45 eNB
50 HSS
60 PCRF
80 Access network_A (E-UTRAN)
90 Core network_A
120 Access network_B (5G AN)
122 gNB
130 UPF
132 SMF
140 AMF
150 UDM
160 PCF
170 N3IWF
190 Core network_B

## Claims

1. A User Equipment (UE) comprising:
a transmission and/or reception unit;
a controller; and
a storage unit, wherein
the transmission and/or reception unit receives, from a core network, rejected NSSAI for a current tracking area and/or a rejection cause indicating S-NSSAI not available in the current tracking area,
the rejected NSSAI includes S-NSSAI that is not available in the current tracking area in a current registration area and that is available in another tracking area in the current registration area,
the controller stores the S-NSSAI in the rejected NSSAI for the current tracking area in the storage unit, and
use of the S-NSSAI is forbidden in the current tracking area during when the S-NSSAI is stored in the rejected NSSAI for the current tracking area in the storage unit.
